# EUROPEAN PATENT SPECIFICATION

(11) **EP 4 138 548 B1**
(45) Date of publication and mention of the grant of the patent: **10.07.2024**
(21) Application number: 21721423.8
(22) Date of filing: 20.04.2021
(51) Int. Cl.: A01K 61/60

(54) **A VARIABLE BUOYANCY STRUCTURE FOR AQUACULTURE**
EINE VARIABLE AUFTRIEBSSTRUKTUR FÜR DIE AQUAKULTUR
UNE STRUCTURE À FLOTTABILITÉ VARIABLE POUR L'AQUACULTURE

(30) Priority: 20.04.2020 GB 202005731; 05.10.2020 GB 202015781
(43) Date of publication of application: 01.03.2023
(73) Proprietor: Impact9 Energy and Marine Ltd., Skerries Co., Dublin (IE)
(72) Inventor: FITZGERALD, John, Skerries K34 F751, Co. Dublin (IE)
(74) Representative: Murgitroyd & Company
(86) International application number: PCT/EP2021/060279
(87) International publication number: WO 2021/214087

(56) References cited:
- JP-A- 2014 113 141
- US-A- 1 336 356
- US-A- 5 299 530

## Description

### Field

The present application relates to marine structures, especially for aquaculture operations and in particular sinker tubes, beams or struts for use in aquaculture structures such as cages or pens for housing fish as well as supporting structures for the culture of shellfish, seaweed or any other marine life. In this context, it will be appreciated that whilst reference is made specifically to fish and shellfish, it also extends to other forms of aquatic life including seaweeds and any references to fish or shellfish should therefore be interpreted in light of fish or shellfish being an example rather than a limitation of the type of marine life that may be farmed.

### Background: Tensile Structures

Tensile structures use structural elements that carry only tension and no compression or bending. Common tensile structural elements include thin shell membranes and cables. Membranes with limited thickness only resist loads that put the membrane in positive tensile stress along its plane and not compression or out of plane bending. Examples of membrane structures include sheets of polymer-based materials (for example rubber, pvc or polyurethane). Cables or "tendons" such as ropes, chain, wire cables are 1-dimensional tensile structures that principally resist extension along their axis but resist only limited compression or bending about a transverse axis. Cables, especially ropes based on filament strands can be twisted, knotted, or woven together at regular intervals to form open-meshed nets or fabric sheets. Nets are strong membrane structures that can withstand large loads in their plane, while being permeable to fluids and objects smaller than the net's mesh size. Fine-meshed fabric sheets can also be coated in rubber or have flexible polymers extruded along their length in order to produce strong, fabric-reinforced membranes that are impermeable to fluids.

A key advantage of tensile structures is that they are typically very light relative to the volumes they can enclose and the loads they can resist under certain conditions, while they can also be collapsed, folded or rolled for transport and storage. They are also resilient to dynamic environmental loads as they are typically flexible and can be configured to shed excess loads through dynamic flexibility. For these reasons, tensile structures are particularly popular for temporary structures subject to dynamic environmental loads. Examples of uses would include tents and for building structures at remote locations where the logistics for delivery of heavy building materials is costly (for example rope bridges in mountainous locations). As such, they are also very well adapted to marine applications for mooring systems and also of particular interest in fisheries where they can be used for trawl nets that can be winched and stowed onto net drums.

A limitation of tensile structures is that they obtain their strength and structural form by being pre-tensioned and cannot form stable structures alone.

To function, they generally must be placed in pre-tension, often relying on externally applied loads. This means that tensile structures are frequently supported by pre-tensioned "mooring" cables, anchored to the ground and/or supported by rigid beam elements (e.g. tent poles supporting a textile membrane that is anchored to the ground with guy ropes). Tensile structures can be pre-stressed through gravity forces, where tensile elements are pre-tensioned between anchor points by their own weight (a catenary structure). Gravity-tensioned tensile structures are popular in marine applications as positive and negative buoyancy forces can readily be deployed to pre-tension immersed structures. However, such gravity tensioned structures must often still rely on ground anchors to hold their pre-tensioned shape.

One alternative means to provide pre-tension without reliance on anchor loads are pressure supported structures. In such arrangements an enclosed impermeable membrane structure is inflated with a fluid to a desired pressure in order to be pre-tensioned into the required structural form. This approach has found application in terrestrial applications to produce "inflatable beams" for structures.

### Background: Tensile Structures in Marine and Fisheries:

The use of tensile structures is very common in marine applications but most especially in fisheries and aquaculture. Position mooring structures are a ubiquitous example, where gravity pre-tensioned cable structures can position structures in the marine environment using a mix of positively buoyant and negatively buoyant elements and anchors. They are effective at resisting steady wind and current loads to maintain general station keeping, while also being flexible to large dynamic loads from waves so that these larger loads are reacted inertially and not by anchor structures. This and the fact that tensile elements can be winched and stowed in confined spaces or around cable drums on relatively small vessels makes tensile structures very effective solutions for this application.

For wild-capture fisheries, trawl nets are another example of tensile structures. Here the net structures are deployed using pre-tension from trawling vessel's propulsion system acting against the drag forces acting on the immersed trawl net as well as specially designed "doors" (wings) that hold the net open in the desired condition to capture fish. The fact that this very large volume structure can be easily collapsed and wound onto a drum is an essential aspect of cost-effective wild catch fishing operations.

### Background: Tensile Structures and Aquaculture

Global Aquaculture was a $169 billion market in 2015, when it overtook wild catch seafood production and is anticipated to grow to circa $250 billion by 2022. The market is expected to grow to meet global demand while taking pressure off wild caught species. In a number of aquaculture sub-sectors there is pressure to move farming operations into more exposed environments where environmental loading on farm structures presents challenges. Examples include fin-fish production, especially salmonid species as well as bivalve shellfish production such as mussels, oysters, clams, scallops.

### A) Finfish Aquaculture

Global salmon production dominates finfish aquaculture and global production is already at 2.5 million tonnes (a $15.4 bn market), with the sheltered fjords of Norway and Chile providing the bulk of current salmon production. The aquaculture market in Scotland is expected to double by 2030.The sustainability of growing production at sheltered sites has been called into question. While alternative growth paths include onshore fish rearing using for example recirculating aquaculture system (RAS) tanks or the like, or the use of closed containment pens at existing locations, it is believed that there may be an advantage in keeping farmed fish in open marine pen conditions, closely approximating that of wild fish. However, the sector may need to address more exposed open-ocean sites to grow sustainably.

Like wild-capture structures, state-of-the-art coastal fin-fish aquaculture net pens typically utilise tensile net structures, suspended from floating beam structures. Initial concepts included those using tensile structures only, relying only on external anchors to provide pre-tension to suspend nets to enclose the required volumes. However, it was found that practical pen structures required the introduction of non-tensile beams, in order to form a stable net volume form, independently from external anchors. These are typically formed from a floating collar or ring structure that maintains its vertical position by its hydrostatic characteristics with reference to a surface-piercing water plane area. A further bend resistant sinker ring (or alternatively individual weights), are typically dropped to their operating depth (sometimes with winched cables), to be suspended from the floating collar to pre-tension the net. Tensile nets then span the gap between the floating collar or floating ring structure and sinker ring as well as the area within each ring to form an enclosed net pen volume from the water surface to the sinker ring.

Rigid plastic pipe structures are commonly employed as floating collars or sinker rings for aquaculture pens or cages. As these are not tensile structures, they are not generally collapsible/inflatable and once they are configured for use, they remain in this configuration throughout their operating lifetime. Alternatives include steel collar structures, though plastic retains a certain degree of structural flexibility that reduces loads under dynamic environmental conditions, in particular wave loads.

Although not commonly adopted, the concept of collapsible/inflatable tubes which can form floating collars or floating structures for aquaculture pens when pre-tensioned by inflation pressure, are known conceptually in the prior art. These tubes are typically filled with pressurised air in order to form a substantially rigid support member. In the prior art there is little or no treatment of how the beam rigidity of an inflatable beam can be optimised for aquaculture structural applications. The buoyancy of these type of tubes is generally positive or can be made neutral if pressurised with water. These tubes generally do not thus provide means for generating significant negative buoyancy, in particular, they do not provide a level of negative buoyancy which would be sufficient to enable the tubes to maintain net wall tension in a vertical direction for example.

Sinker rings are essentially a means of increasing resistance to loading on the nets that form the aquaculture pens and cages. Sinker rings are required to provide negatively buoyant tensioning forces that pull the nets downwards from the floating collar or floating ring which generally rests on the surface of the sea, thus giving the pen or cage a more defined volumetric structure in the water. The concept of sinker rings has evolved from attaching individual weights to a submerged collar, as it has been discovered that the structure of a ring provides the necessary weight to maintain the pen in the desired configuration and also resists bending moments impacted by the subsea environment more efficiently than individual weights. As the prior art sinker rings are large in size and difficult to manoeuvre into position, lifting machinery is often needed to install and handle sinker rings. Nets also need to be periodically replaced whilst keeping the stock within the containment area contained, which results in further handling issues with the prior art sinker rings. Some operators revert to individual weights due to handling difficulties of sinker rings. Frequently, divers are required to inspect or to aid net replacement operations where there is not a way to raise weights to the surface easily.

### B) Shellfish & Seaweed Aquaculture

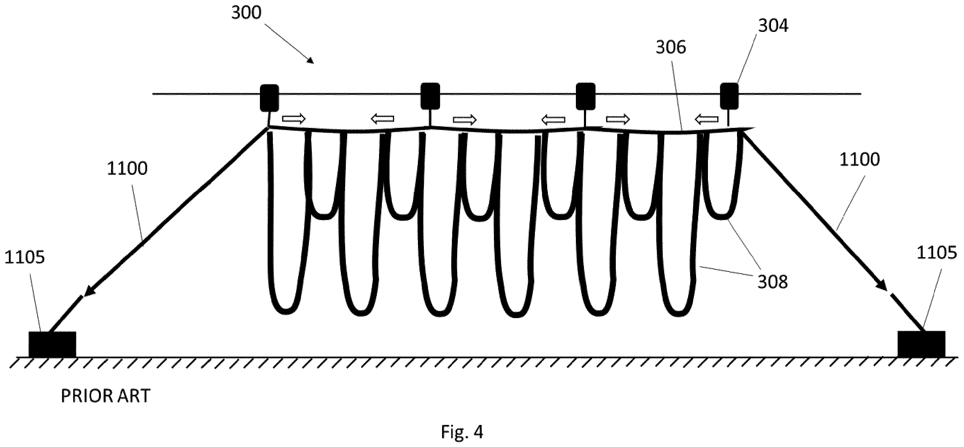

Many shellfish and seaweed types are cultured from seed attaching to the substrate of structures. In suspension culture or rope culture, biomass attaches to rope or net substrates that are suspended in an aquatic environment. A number of methods have been employed to suspend such ropes, including "Raft Culture" where seeded "drop ropes" are suspended from floating pontoons as well as Longline culture, where single "Longline" drop ropes are suspended from a long horizontal "headline" rope at multiple points in hanging loop drops. The headlines are maintained in position by multiple floats (see Figure 4). This technique allows highly mechanised harvesting and yields 18-20 tonnes/ha/yr. A multi-longline system has also been developed with more than one headrope sharing common floats.

A feature of Longline culture is that because a tensile headline rope also referred to as a headrope) is typically suspended between individual floats, along which biomass is suspended, a pre-tension must be maintained in the headrope to keep the longlines straight and separated, as exemplified by the illustration of Figure 4.

The tension is provided by anchors at each end of the headrope which are in turn connected to the headrope by mooring lines. Where suspended biomass growth is significant, the required pre-tension can become significant.

As an example, mussel longlines are currently suspended from headropes that are up to 200m long and anchor blocks of up to 4 tonnes in weight are required to keep such headropes in tension. To limit spatial footprints, the mooring lines at either end of a headline are also typically short relative to the water depth. The "scope" of an anchor line is the ratio of the line length to the water depth and this ratio typically does not exceed 3 for mussel lines. Light ropes are typically used rather than chain and because of the pre-tension from the longline, the mooring line is taught, such that the anchor is typically loaded with a vertical component, limiting anchor choice to types that can resist such loads (e.g. gravity anchor, screw-in anchor, suction anchor). This "taught" system results in good horizontal station keeping but also has limited compliance to comply with dynamic offsets introduced by large or long period waves at sites where such conditions exist. This limitation is generally precipitated by the need for a high level of pre-tension required to hold the headrope in tension. With a trend to position such structures in more exposed sites, the requirement for high levels of pre-tension at end moorings becomes a difficulty.

One means to reduce or eliminate the need for pre-tension in the headrope is to replace or support this tensile headrope with a strut or beam element that can withstand compressive loading and distribute and distributes the buoyancy along the entire line. The use of positively buoyant beams or buoyant structures that use beams to maintain rigidity and suspend rope culture is known in the prior art, for example in "Raft Culture".

More recently SmartFarm AS from Norway have developed a mussel farming system based on the use of a rigid polyethylene pipe for flotation and from which a net is suspended as a substrate for mussel culture.

A disadvantage of this approach is that it required a bespoke harvesting system to traverse the polyethylene pipe. The straight polyethylene pipe section is similar to that of ring collar structure typically found on salmon farming fish pens and can resist compression and bending loads. This would reduce the need for end mooring tension when employed to support a longline headrope suspending drop ropes. However, polyethylene pipes cannot collapse for storage and transport. They are also of a relatively high and fixed bending strength and stiffness, often limiting the ability to dynamically flex and shed loads under certain wave loading.

Some aquaculture biomass has a density greater than the aquatic environment such that culture ropes gain negative buoyancy during growth, which is often compensated for by the addition of floats during the growth cycle. The handling of floats is labour intensive and storage of rigid plastic flotation on board installation vessels or for storage and general distribution logistics is a significant cost in a sector without high profit margins.

At the same time, other forms of aquaculture such as seaweed culture will gain positive buoyancy as biomass grows.

### Background: Moving Aquaculture Structures Further Offshore

Ongoing trends to move aquaculture offshore necessarily result in exposures to larger waves. A significant advantage of tensile structures is that they can flex to alleviate loads induced by waves. Wave particle motions are largest at the surface and reduce exponentially with depth. Short period waves will penetrate to a lower depth than long period waves. One component of wave forces on immersed structures is called the "inertial force" or "diffraction force" and relates to accelerating flows of water mass around structures. This force is largest close to the surface and reduces exponentially with depth. A second component of wave forcing relates to surface-piercing structures only and is referred to as the "Froude-Krylov" force. This relates to the tendency of a floating structure with a water plane area to follow movements of the water surface. Structures with large water plane areas and/or volumes close to the surface will have large wave forces induced on them which must be reacted by accelerating their own mass or where their ability to move is restrained by attached structures, for example by the weight of suspended biomass, nets, or moorings, then also by reaction loads applied by those attached structures. Where such attachment loads are concentrated at connection points they can result in high stresses and failures.

In the case of a longline with multiple floats exposed to waves, particularly high frequency steep waves, the dynamic forces induced between the surface floats and the suspended biomass can result in significant accelerations. It is known that accelerations induced on culture ropes by waves reduce growth rates and can result in the detachment and loss of biomass. It is important therefore that the induced accelerations on culture ropes because of wave loading, in particular from high frequency or steep waves, are minimised. In the case of fish farming pens, floating collar structures onto which nets, mooring ropes and sinker ring attachments are suspended, significant forces can be induced at the attachment points, resulting in accelerations and loads on the attached structures. Controlling the wave response requires careful consideration of the flotation design. A number of design strategies can help in this respect:
1. Submergence: Fully submerging floating structures eliminates the Froude-Krylov component of wave forced but it should be understood that submerged structured near the surface are still exposed to significant wave forces. Submergence strategies are effective at reducing the wave response and are known in the prior art. A disadvantage of this approach that an alternative means to stabilise the structure's vertical position in the water column must be adopted, for example using a suspended chain from the structure that is in contact with seabed so that the mass carried by the structure varies with vertical position or alternatively if the structure is attached to an elastic spring connected the seabed or another stable structure. Submerged collar structures formed from HOPE plastic rings for fish pens are known in the prior art and the reduced wave loading on the collar means reduced loads and accelerations between the collar and the attached net and sinker ring. However, they must be still be vertically stabilised by external moorings, usually from smaller floating buoys.
2. Limited Freeboard: A water plane area is generally required to provide a hydrostatic "spring" that will keep a floating structure and attached aquaculture structures at a stable depth in the water column and avoid unstable "sinking". The volume of "spare" flotation structure above the surface becomes immersed in response to an upward free surface disturbance, resulting in a buoyancy force that will tend to return the structure to the new free surface position. This movement is desirable in the context of following slowly varying surface disturbances such as tidal elevation changes or long period wave disturbances. However, in high frequency or steep waves it can result in undesirably high accelerations and forces. One strategy is to limit the volume of floating structure above the surface at static equilibrium to a level that still provides surface stability but is insufficient to respond to rapidly changing free surface conditions. The effect is that a rapid surface disturbance from high frequency or steep waves will "wash over" the floating structure inducing limited additional buoyancy force over a short period of time, such that the dynamic response amplitude of the structure from its equilibrium is limited and therefore any forces and accelerations induced on attached aquaculture structures is also limited. The "freeboard" is the term referred to the distance between the waterline of a floating structure and the uppermost watertight surface or "deck". A sealed structure with a small "freeboard" will exhibit these highly non-linear response properties where waves above a certain threshold steepness will wash over decks as "green water" but there is still no risk of inundation or general sinking or loss of vertical stability for such a sealed structure. A limitation of this approach is that as dense biomass grows on a structure, a risk of sinking does arise if the stabilising "spare" buoyancy available above the surface can no longer balance the increasing mass. For these reasons, many longline mussel farmers only install enough flotation on longlines to balance biomass plus a limited "freeboard" but they must monitor submergence levels carefully, adding new floats to the headrope as required to avoid sinking. This adds to labour intensity.
3. Limited Water Plane Area: A further strategy is to choose flotation shapes that have larger immersed volume relative to their water plane area. The hydrostatic "spring" that stabilises floating structures in the vertical or "heave" direction is directly proportional to the water plane area and the natural period of oscillation of the structure in that direction can be increased by reducing this spring. This makes the structure respond resonantly at longer wave periods (or low frequencies), while reducing the response at short periods (or high frequencies). This provides a floating structure that will follow tidal movements and longer period ocean waves that also penetrate to the depths of suspended structures so that all connected structures move in unison with limited induced loads and low accelerations, but a structure that will have limited motion response in short period waves with high accelerations so that loads and options induced on connected to suspended aquaculture structures remains low. This strategy is known in prior art where longline flotation supplied by Gael Force in Scotland is formed from a vertically oriented pipe instead of the more typical horizontally oriented "barrel" shaped flotation. A limitation of the approach is that it is generally only possible to attach a single headrope to floats of limited waterplane area due to insufficient span to spread two ropes apart and maintain separation.
4. Introduce a bend resistant beam: The first two strategies are relevant for all structures including single small buoy "floats" attached to aquaculture structures that have small horizontal dimensions relative to wavelengths. A final strategy to control induced accelerations on immersed aquaculture structures relates to the introduction of structures with horizontal dimensions that are large relative to wavelengths. Considering horizontal beams at or near the surface that are exposed to wave disturbances: Short period waves with wavelengths similar to or shorter than the beam will result in an attenuated heave and pitch motion response as the bend stiffness of the beam will resist induced wave loads spanning its length. The bend stiffness can be optimally selected by design to attenuate the motion response induced on attached aquaculture structures to a desirable degree - for example so that it more closely matches the natural motion of suspended structures at a greater depth where waves are attenuated, reducing relative forces between the beam and attached structures. By contrast the beam will tend to follow the motions of longer period waves with wavelengths similar to and larger than the length of the beam, such longer period waves generally exhibiting lower accelerations and penetrating to greater depths so that suspended structures will tend to move in unison with the beam. This strategy of selecting optimal bend stiffness will be particularly advantageous for long flotation structures relative to wavelength, such as for longline aquaculture.

US 1 336 356 A discloses a fish trap comprising a variable buoyancy beam of the related art.

### Summary

The background and emerging market trends in aquaculture indicates demand for a structural beam that can be deployed to suspend tensile structures such as nets and ropes in a desirable, pre-tensioned and taught form, resisting the tendency for gravity loads and environmental loads to collapse such structures. Such a beam will advantageously realise one or more of the following features:
- It reduces or eliminates the demand for "taught" mooring cables and ground anchors to maintain pre-tension in tensile aquaculture structures, such that a more compliant low pre-tension mooring system can be employed that allows the overall aquaculture structure to move in compliance with wave-induced motions, greatly reducing external mooring and anchor loads;
- It is itself formed from tensile elements so that the beam as well as attached structures can be collapsed or folded for storage, transportation or installation, but such that the beam's essential compression and bend properties are "deployable" once installed;
- It can be configured to exhibit positive or negative buoyancy forces and to use its gravity forces to pre-tension attached tensile structures accordingly.
- It has a variable buoyancy such that it can be configured to float stably at the surface with a variable emergence or fully submerged of variable weight. It can readily compensate for biomass growth on the attached structures to avoid any loss of stability.
- When deployed horizontally near the surface, its length and bend stiffness properties optimally attenuate the wave-induced response of high frequency or steep waves while complying with low frequency waves, for which attached suspended structures will tend to move in unison with the beam.

Accordingly, the present application provides a beam structure as defined in claim 1, for use in aquaculture. The beam comprises a sealed hollow tube which is configured to hold at least a first compressible fluid and a second incompressible fluid. The first fluid is suitably a gas and the second fluid is suitably a liquid.

The buoyancy of the beam may be adjusted by varying the ratio between the two fluids in the tube. The hollow tube suitably has at least one inlet and at least one outlet to allow for the introduction/release of one of the fluids. In certain arrangements, there is at least a first inlet and a first outlet for the first fluid and at least a second inlet and a second outlet for the second fluid. In the case of the inlet, this allows the connection of a source of fluid. A suitable valve arrangement allows for the opening or closure of the inlets/outlets as required. Each inlet may be an outlet.

According to the invention, at least one flexible bladder formed by a flexible impermeable membrane is provided internal to the beam structure to separate the first and second fluids. The bladder may be a sealed tube. In an alternative arrangement, the bladder comprises a flexible membrane dividing the sealed tube along its longitudinal axis to create a first longitudinal compartment for the first fluid and a second longitudinal compartment for the second fluid. The at least one flexible bladder may comprise a series of bladders arranged along the longitudinal axis of the beam.

In a further alternative arrangement, a flexible closed foam may be enclosed within the tube, where one of the fluids, namely the gas, is constrained within the closed foam. This closed cell foam may be used in place of or in addition to the flexible bladder of the second adoption.

The present application has a number of adoptions which may be employed with the beam structure to advantage either alone or in any combination with the other adoptions. In a first adoption, the hollow tube may be externally encircled by a re-enforcing net structure. The external re-enforcing net structure may optionally be used to provide attachment points for suspended aquaculture structures that can benefit from the support and buoyancy of the beam. Advantageously, the re-enforcing net structure may be employed to distribute attachment loads onto the tube. This encapsulating net structure may also be pre-tensioned by the tube wall, such that the encapsulating net structure can resist additional bending or buckling due to external loads applied to the beam. The external re-enforcing net structure may optionally also be pre-tensioned by contact forces applied by the membrane wall of the tube as it expands, such that the encapsulating net structure can resist additional bending or buckling due to external loads applied to the beam.In this case, the flexible tube wall can optionally be formed from materials of lower tensile stiffness or even an isotropic flexible material, such that the external re-enforcing net structure can provide the required tensile rigidity.

In a second adoption, a valve arrangement is provided to adjust the ratio of the first fluid to the second fluid in response to the weight of material, e.g. aquaculture, applied to the beam. More particularly, the weight of an aquaculture, e.g. seaweed or shellfish, increases as it grows, causing a beam to slowly sink under the increasing weight. The valve arrangement is configured to release the denser fluid from the beam as this happens to restore the buoyancy of the combined beam and load to a desired level. The valve arrangement may comprise a pressure-actuated valve or a float-actuated valve configured to open once the beam's submergence exceeds a desirable envelope, such that one of the first fluid or second fluid is expelled from the beam and so that the buoyancy of the beam changes advantageously. For example, where the energy of a compressed first fluid may be used to expel a second fluid of higher specific gravity through such a pressure actuated or float-actuated valve, a buoyancy increase is affected to passively compensate for changes in external loading on the beam, for example due to the weight of shellfish biomass growing on attached ropes. Advantageously, such a passive solution does not necessarily rely on external power sources or active logical control. Suitably the pressure-actuated valve or float-actuated valve is configured to have a damped or delayed response to short term pressure fluctuations, such that the valve will not open in response to passing waves, instead responding only to longer term changes in mean submergence.

These adoptions may be employed in isolation or combined together to advantage in any combination and may be deployed in a variety of different aquaculture or marine structures as will become apparent from the description which follows.

Suitably, the cross-sectional diameter of the beam will be greater than 50 mm, which is suitable for smaller aquaculture applications, such as seaweed longlines. The beam may have a cross-sectional diameter up to 2000 mm, which would be for larger structural applications, such as for supporting fish pen containment net structures in exposed offshore environments. It will be understood that the beam need not be cylindrical, in which case a reference to cross-sectional diameter may be understood to a reference to the equivalent diameter of a cylinder having the same cross-sectional area.

The beam is suitably longitudinal in nature. Thus, the length of the beam may be at least 5 times its cross-sectional diameter. In many applications, the length of the beam will be at least 10 times its cross-sectional diameter. The tube is configured to retain a first fluid of a first density and second fluid of a second density, wherein buoyancy of the tube is operatively varied by selective variation of a ratio of the first fluid to the second fluid within the tube. Preferably, the wall of the tube is configured such that it can withstand pressures in excess of external ambient pressures such that the first fluid and the second fluid can be retained at elevated pressures, preferably at pressure within the range of 0.5 bar to 20 bar in excess of external ambient pressure.

The first fluid and second fluid are separated from each other through at least one internal bladder inside the tube, the bladder being formed by a suitably flexible impermeable membrane that may either fully enclose a volume of the first fluid or fully enclose a volume of the second fluid or alternatively may be attached to the wall of the tube in such a way as to separate volumes of the two fluids enclosed by the tube wall and the membrane. The bladder is configured such that the ratio of the volume of the first fluid to the second fluid within the bladder may be varied, while the fluid volumes are kept separate to facilitate separate valve connections and the like. The membrane material of the bladder is flexible, such that the stresses induced in the bladder wall are small over the required range of volume changes and such that the difference in pressures on either side of the bladder wall at a given location over the required range of volumetric variation do not exceed 2 bar, preferably not exceeding 0.5 bar. As such, the membrane material of the bladder is preferably of a flexural rigidity not exceeding 1 Nm, where the flexural rigidity is affected by the membrane thickness and materials properties, notably the Young's modulus and Poisson's ratio. The bladder membrane will have sufficient surface area to take up the required volume change or optionally be of a suitably low in-plane stiffness to stretch to the required volumes, while inducing only a limited pressure differential between the first fluid and the second fluid. Suitable bladder membrane materials include but are not limited to natural or synthetic rubber sheeting such as butyl, latex or silicone rubber, PVC, polyurethene or polyethelene sheet materials and rubber-coated fabric membranes using polyester, nylon or aramid fibres or other impermeable fabric materials such as those under the brand names of Dacron or Gore-Tex. Preferably the wall thickness of the bladder membrane will not exceed 2% of the beam diameter (in a range of 1 mm for 50 mm diameter beams up to 30 mm for 1.5 m diameter beams).The bladder may be provided as a single bladder or, for example, comprise a plurality of internal bladders distributed at a variety of locations within the tube. Where there is a plurality of bladders, the bladders may be discretely formed or they may be co-formed together. In one arrangement, the plurality of internal bladders are at least partially provided by the cells of a flexible closed cell foam structure, for example a polyurethane or polyethylene expanding foam or similar.

Suitably the internal bladders can be secured within a positional envelope using internal attachments, for example rope, so that their general longitudinal position within the tube is maintained in order to provide general ballast stability under dynamic loading of the beam.

Suitably, the wall of the tube may be formed using an impermeable tensile membrane that is foldable when it is not pre-tensioned. Such a tube can be configured using an anisotropic membrane material with a low flexural rigidity but with a high planar stiffness, such that it is possible to inflate the tube to a rigid form at pressures significantly in excess of the external ambient pressure. The bending and compression strength of the tube may be operatively varied by introduction of at least one of the first fluid or the second fluid in order to provide pre-stress in the tube's membrane wall so that the tube resists bending or buckling due to external loads applied to the beam. Suitably, the flexural rigidity of a 1 m diameter tube wall may be less than 10 Nm while the planar tensile stiffness will exceed 1000 MN/m.

Suitable materials for such a flexible tube wall include rubber-coated fabric materials of polyester, nylon, aramid or polyethylene fabrics or other impermeable fabric materials based on high-tenacity fibres. The thickness of a flexible tube wall may be limited to give a low flexural rigidity, preferably not exceeding 5% of the sectional diameter.

Suitably, the plurality of internal bladders are in fluid communication with at least one connection point external to the tube. This fluid communication may be provided using pipes or hoses. Optionally a common manifold may be provided connecting a plurality of bladders to the at least one external connection point. Control valves may be provided for flow control between the manifold and individual internal bladders. The control valves may be check valves, solenoid control valves or other actuated valves that affect active logical control of fluid flows.

Suitably, the plurality of internal bladders can be inflated from a single common inflation manifold with check valves at the inlet to each bladder. The check valves passively prevent the movement of fluid between individual bladders connected to the single common inflation manifold, while allowing all bladders to be inflated from a common external inlet to a common inflation pressure.

Suitably, the plurality of internal bladders can be deflated from a single common deflation manifold with check valves at the outlet from each bladder. The check valves will prevent the movement of fluid between individual bladders connected to the single common deflation manifold, while allowing all bladders to be deflated to a common external outlet to a common deflation pressure, including to affect the full volumetric collapse of the plurality of internal bladders.

The variable buoyancy beam may be used to suspend a containment net for fin-fish aquaculture or a support medium, such as for example ropes, for the culture of shellfish or seaweed.

Where negatively buoyancy forces are required to be applied to the attached aquaculture structure, the beam may also comprise a negatively buoyant constituent extending about or within the tube, the buoyancy of the beam being a combination of a buoyancy of the tube with the negatively buoyant constituent.

Suitably, the first fluid has a density less dense than the density of the water in which the beam is to be positioned.

The tube may be provided in a collapsed state. In this collapsed state, the tube may be pressurised through the introduction of at least one of the first fluid or the second fluid in order to provide rigidity to the tube in an expanded state.

The beam is configured to adopt a floating state of variable emergence or a fully-submerged state of variable buoyancy through selective variation of the ratio of the first fluid to the second fluid within the tube.

The first fluid is compressible so that the selective variation of the ratio of the first fluid to the second fluid within the tube can be achieved through variation of a second fluid only, while simultaneously varying the pre-tension in the wall of the tube and any encapsulating net structure.

The first fluid stores energy when it is compressed and has a low specific gravity and the second fluid is incompressible with a higher specific gravity so that the stored energy of the compressed first fluid can be used to expel the second incompressible fluid from the tube without the need for another source of energy. In the case where the first fluid is air and the second fluid is water, it will be appreciated that the air may be compressed air.

The beam may comprise a control valve, wherein the valve is configured to control the access and egress of at least one of the first fluid or the second fluid between the interior of the tube and the exterior of the tube. The access and egress may be via the common inflating manifold or the common deflating manifold.

The beam may comprise a pump wherein the pump is configured to move at least one of the first fluid or the second fluid between the interior of the tube and the exterior of the tube via the valve. This movement may be via the common inflating manifold or the common deflating manifold.

The beam may comprise at least one umbilical which is configured to connect the valve to a source of the first fluid or the second fluid.

In certain arrangements, as will be detailed below, it is necessary to ballast the beam with a negatively buoyant constituent. The negatively buoyant constituent may be positioned to be in intimate contact with a wall of the tube. Suitably, the negatively buoyant constituent comprises a high-density ballasting material, for example a metal.

The high density ballasting material may be integrated into the wall of the tube. In one aspect, the metal extends across the wall from an interior of the tube to an exterior of the tube. In an alternative aspect, the metal is attached to, and extends about, the exterior of the tube.

Suitably, when the high density ballasting material is metal, it is provided in the form of wire or chain.

Suitably, one or more beams as described above are configured to form a generally toroidal structure, such as a curved ring or polygonal toroid. Optionally, the one or more beams forming a curved ring or polygonal toroid are connected to a hub structure with spoked beams, struts or cables, optionally being stabilising elastic tendons in order to form a centrally-supported polygonal toroid. The diameter of the curved ring or toroid may suitably be at least 50 times the diameter or equivalent cross-sectional dimension of the variable buoyancy beam.

Suitably, the variable buoyancy beams may be connected at their ends to form a truss structure.

These and other features, advantages and details of the beam and the adoptions will become apparent from the description which follows.

### Brief Description Of The Drawings

The present application will now be described with reference to the accompanying drawings in which:
Figure 1a illustrates an example of a known pen structure wherein the form of the aquaculture pen structure is maintained by a series of individual weights;
Figure 1b illustrates an example of a prior art pen structure wherein the form of the pen structure is maintained by a rigid sinker ring in the form of a ring structure which is not collapsible.
Figure 2a illustrates an example of a pen structure wherein the pen structure comprises a float ring and a sinker ring, where either or both of the float ring and sinker ring may be formed by one or more variable buoyancy beams;
Figure 2b illustrates a perspective view of a section of variable buoyancy beam, which may be employed as a sinker tube in which a negative buoyancy constituent is incorporated into the sinker tube;
Figure 3 illustrates an example of a pen structure comprising a vertical strut formed by a variable buoyancy beam and a sinker ring positioned around the vertical strut;
Figure 4 illustrates a general layout of a mussel culture longline as is known in the prior art;
Figure 5 illustrates a general layout of a mussel culture system as is known in prior art, where a rigid pipe flotation is used to suspend a net through the water column to provide a substrate for the culture of shellfish such as mussels;
Figure 6a illustrates an elevation and cross-sectional views of a variable buoyancy beam;
Figure 6b illustrates a cross-sectional view of a variable buoyancy beam similar to that shown in Figure 6a, comprising a plurality of internal bladders and a first common manifold with check valves for adding fluid to the internal bladders and a second common manifold with check valves for removing fluid from the internal bladders, so as to prevent fluid moving between internal bladders when installed;
Figure 6c illustrates a cross-sectional view of two variable buoyancy beams similar to that shown in Figure 6b, in which a float-activated valve is provided that opens in response to submergence changes of the variable-buoyancy beam;
Figure 7 illustrates an elevation and cross-sectional views of a variable buoyancy beam with an encapsulating structure, such as a net;
Figure 8 illustrates an elevation and cross-sectional views of a variable buoyancy beam with closed cell foam buoyancy;
Figure 9 illustrates how a number (7 shown) of variable buoyancy beams of the type illustrated in Figure 6 may be connected by end connectors to form a variable buoyancy truss structure, which may be used in aquaculture or other marine applications;
Figure 10a illustrates a perspective view of the variable buoyancy beam arranged in a curved form, with a negatively buoyant constituent in the form of continuously distributed high-density ballasting materials, examples of this type of continuously distributed high-density ballasting materials include dense elongate members as per Figure 14a or steel ropes as per Figure 14b such that it forms a sinker ring;
Figure 10b illustrates a plan view of a sinker ring showing an alternative negatively buoyant constituent to that of Figure 10a in the form of intermittently spaced high-density ballasting materials in a rigid tube of variable buoyancy;
Figure 11 illustrates a centrally-supported polygonal toroid formed from six variable buoyancy beams of the type illustrated in Figure 7;
Figure 12a illustrates a cross section of the variable buoyancy beam similar to that illustrated in Figure 7 in a partially collapsed (deflated) and buoyant configuration;
Figure 12b illustrates a cross section of the variable buoyancy beam similar to that illustrated in Figure 7 in an inflated and buoyant configuration;
Figure 13a illustrates a cross section of the sinker ring comprising a variable buoyancy beam in a partially collapsed and buoyant configuration;
Figure 13b illustrates a cross section of the sinker ring comprising a variable buoyancy beam in an inflated and buoyant configuration;
Figure 14a illustrates a cross section of the sinker ring comprising a variable buoyancy beam showing an alternative ballasting option in the form of dense elongate members in the wall of the tube;
Figure 14b illustrates a cross section of the sinker ring comprising a variable buoyancy beam showing an alternative ballasting option in the form of several steel ropes attached to the exterior of the sinker ring;
Figure 15 illustrates a series of cross sections of the sinker ring comprising a variable buoyancy beam in a deployment sequence where the tube is in various stages of collapse and buoyant configuration depending on the density of the fluid within the tube and the pressure maintained within the tube at each stage;
Figure 16a illustrates a general layout of an exemplary mussel culture system comprising a head beam formed by one or more variable buoyancy beams similar to that illustrated in Figure 7;
Figure 16b illustrates a submerged layout of a further example of mussel culture system with a head beam in a fully submerged position, formed by one or more variable buoyancy beams similar to that illustrated in Figure 6c and in which the buoyancy of the submerged head beam is controlled by float-activated valves that open when submergence exceeds a threshold value.
Figure 17 illustrates a general layout of an exemplary mussel and seaweed culture system having a centrally-supported polygonal ring similar to that illustrated in Figure 11;
Figure 18a shows the mussel and seaweed culture system illustrated in Figure 17, wherein the ring is de-ballasted to the surface for operational purposes such as to facilitate inspection, harvest or maintenance.
Figure 18b shows the mussel and seaweed culture system illustrated in Figure 17, wherein the ring is in a collapsed buoyant condition so as to facilitate installation and/or demobilisation operations.
Figure 19 illustrates an exemplary pen structure, of the type shown generally in

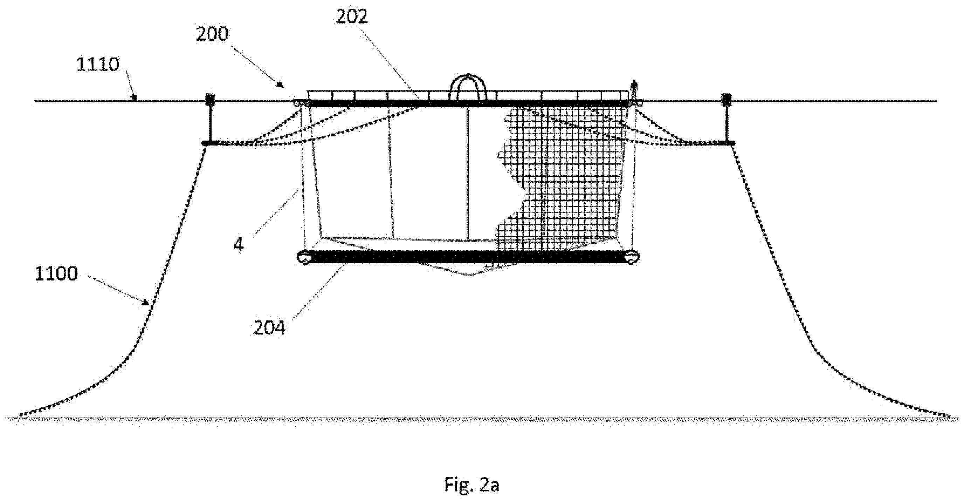

Figure 2a, wherein the sinker ring is partially deployed (semi rigid, ring structure) floating configuration;

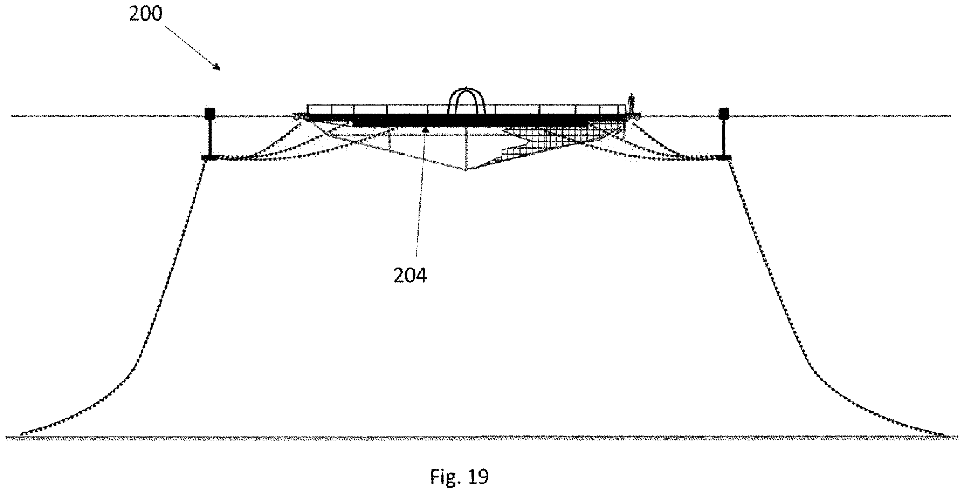

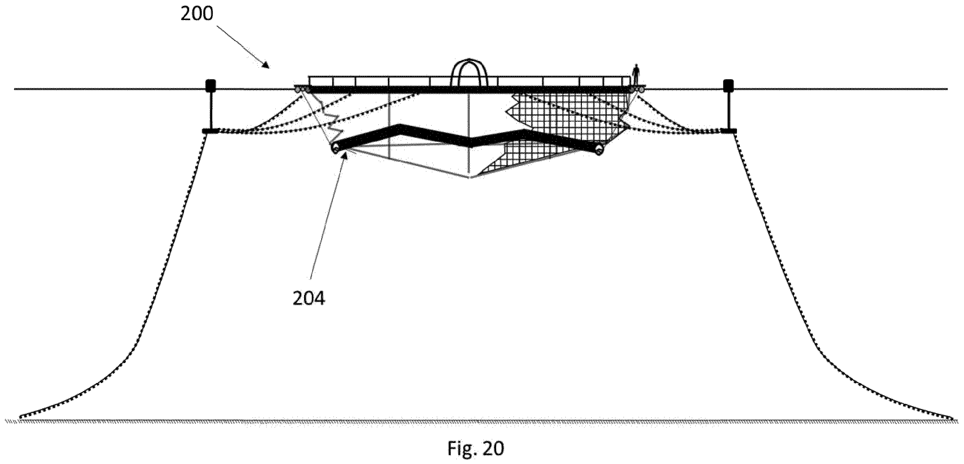

Figure 20 illustrates the exemplary pen structure of Figure 19, wherein the sinker ring is partially deployed (semi rigid, ring structure) with negative buoyancy configuration;

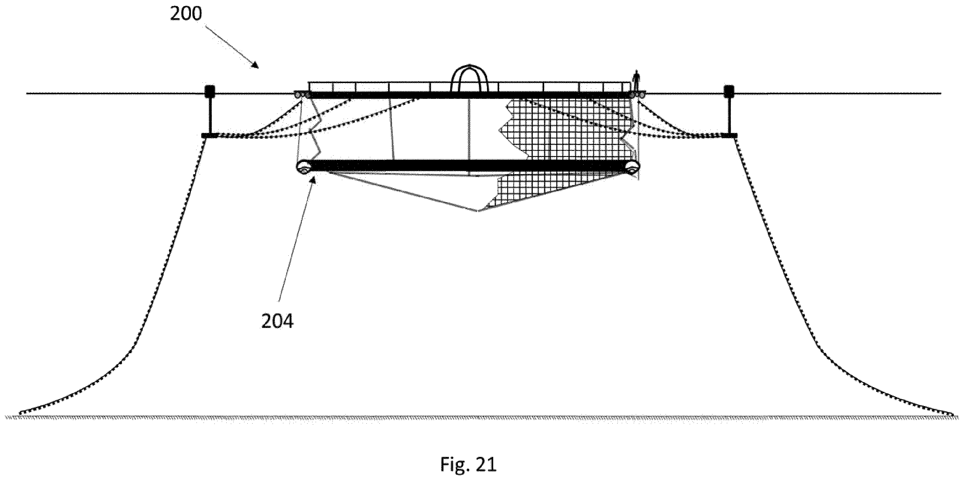

Figure 21 illustrates the exemplary pen structure of Figure 20, wherein the sinker ring is more fully deployed (rigid ring structure) with negative buoyancy configuration;

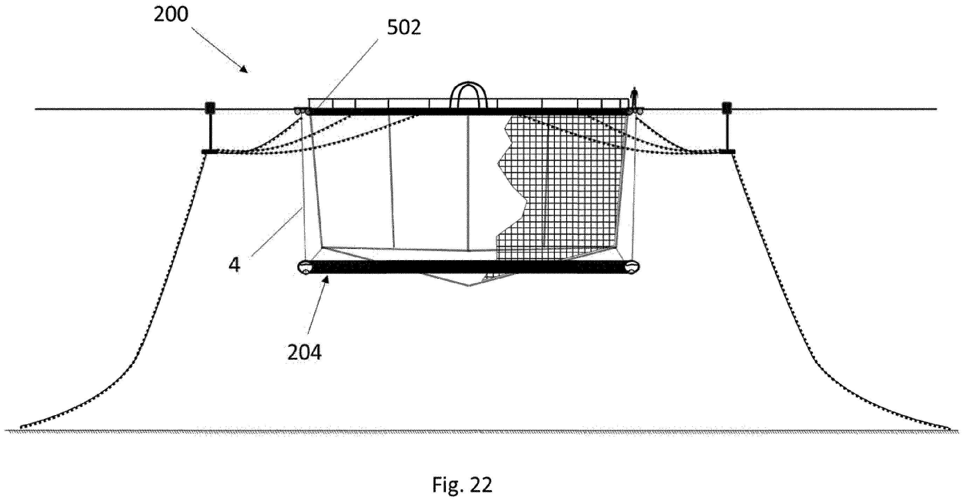

Figure 22 illustrates a situation wherein the sinker ring is fully deployed; and

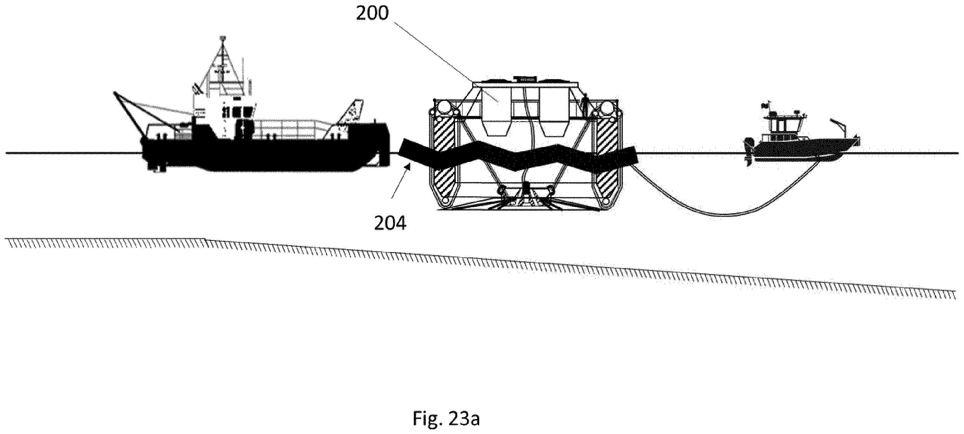

Figures 23a to 23f illustrate positions of an aquaculture pen structure with a sinker ring during various stages of deployment of the sinker ring wherein the sinker ring is shown.

### Detailed Description Of The Drawings

The present application will now be described in greater detail with reference to some examples of how variable buoyancy beam (100) may be employed for aquaculture structures (200).

With reference to the figures there is provided variable buoyancy beams that may be employed and adapted for a variety of different aquaculture and marine structures.

With respect to Figure 2A, variable buoyancy beams may be employed to provide a sinker ring 204 and as a floater ring 202 in a pen structure 200.

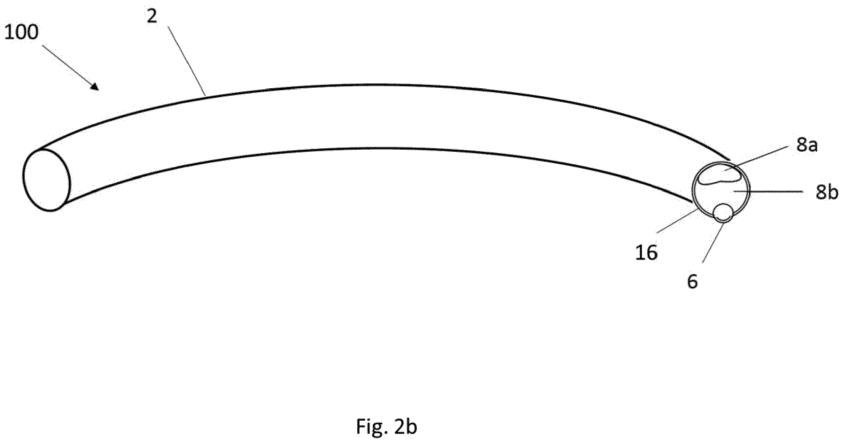

With reference to Figure 2, an exemplary variable buoyancy beam (100) comprises a sealed hollow tube (2). Suitably, the tube wall (16) is formed by an impermeable tensile membrane. The tube (2) is configured to retain a first fluid (8a) of a first density and second fluid (8b) of a second density, wherein buoyancy of the tube (2) may be operatively varied by selective variation of a ratio of the first fluid (8a) to the second fluid (8b) within the tube. Bending and buckling resistance of the beam (100) may be operatively varied by introduction of at least one of the first fluid (8a) or the second fluid (8b) in order to provide pre-stress in the tube's membrane wall so that the tube resists bending or buckling due to external loads applied to the beam (100). Suitably, the material employed for the tube wall is such to allow the tube to be folded or rolled when it is not pre-tensioned.

The tube wall (16) is suitably formed by an impermeable membrane. The impermeable membrane may be selected such that it only resists substantial loads that put the membrane in positive tensile stress along its plane. Examples of suitable membranes are sheets of polymer-based materials (for example rubber, PVC or polyurethane) that may also be used as a matrix material for reinforcing fibres such as nylon, polyester, aramid or steel fibres. Textiles like canvas, GORE-TEX^{™} could also be utilised to form a suitable membrane material. Fine-meshed fabric sheets can also be coated in rubber or have flexible polymers extruded along their length in order to produce strong, fabric-reinforced membranes that are impermeable to fluids. Although the tube may be formed from typical sheet membrane materials, the thickness of materials could be significant at the intended scale, but are unlikely to exceed 5% of the tube diameter in practical implementations (e.g. up to 25mm on a 500mm diameter Tube(2)) and as such some moderate bending loads may still be required to assist collapsing of larger tubes.

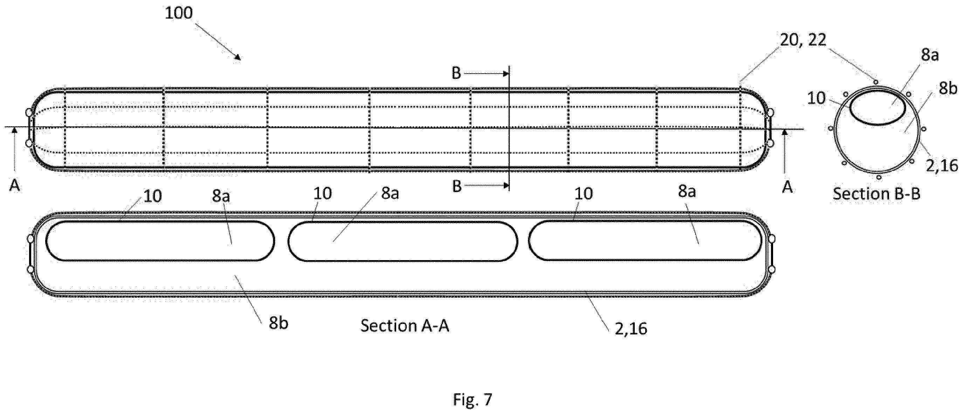

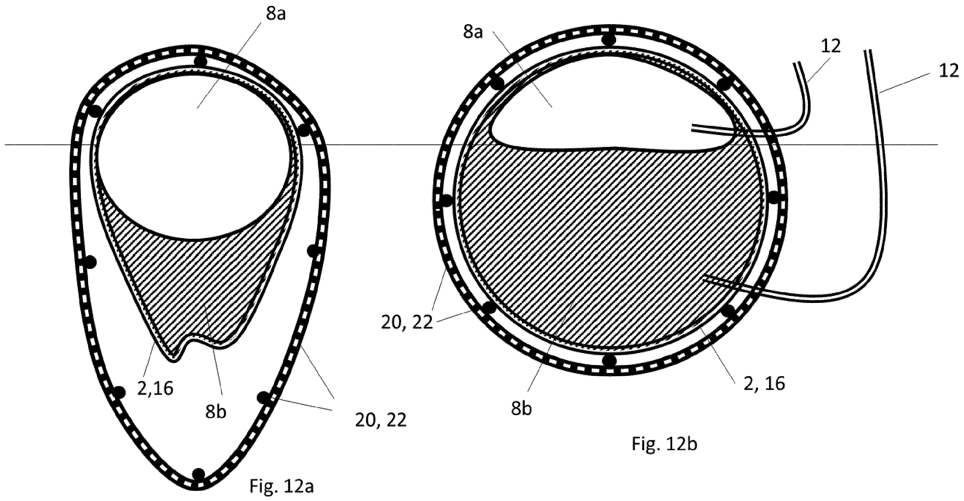

As shown in Figure 7 and Figure 12, the tube may be externally encapsulated in a re-enforcing net structure (20) that may also be pre-tensioned by the membrane wall tube as it expands, such that the encapsulating net structure (20) can resist additional bending or buckling due to external loads applied to the beam. The encapsulating net structure (20) may optionally be used to provide attachment points for suspended aquaculture structures (4, 306, 308, 312), moorings (1100) or any other ropes, cables or structures.

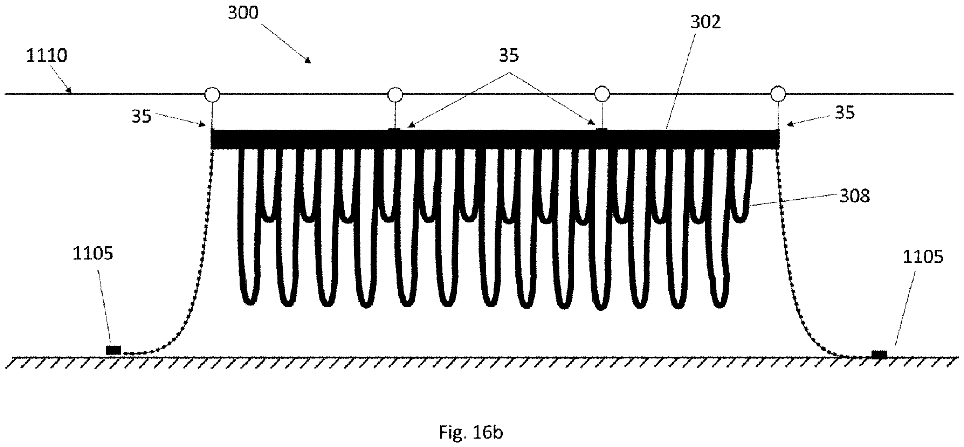

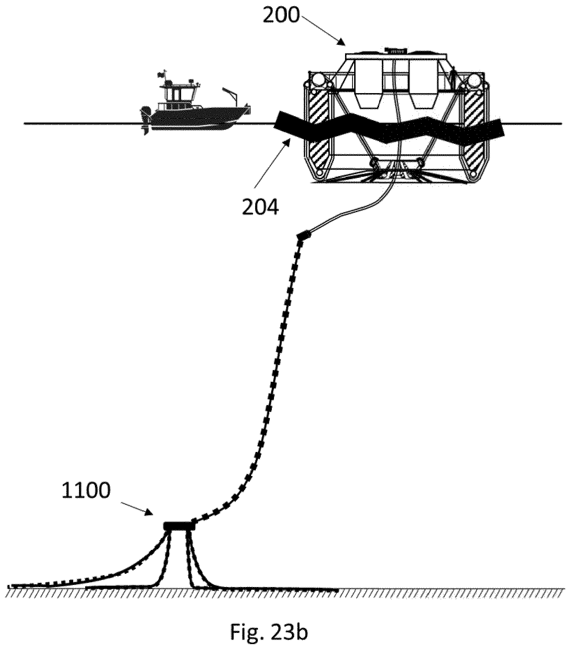

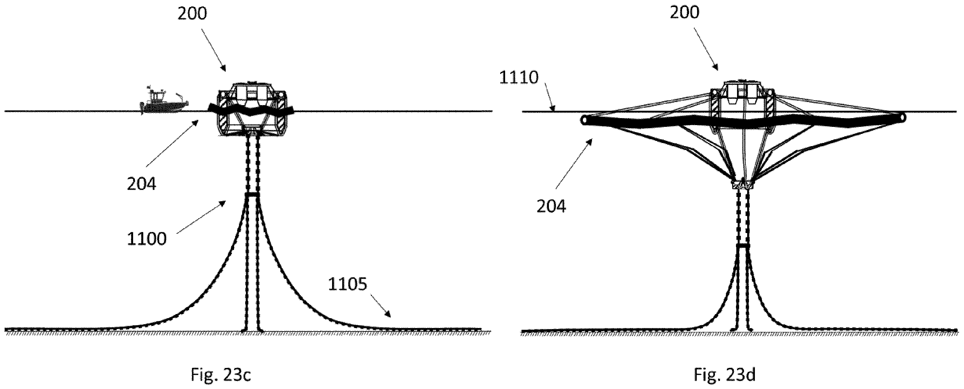

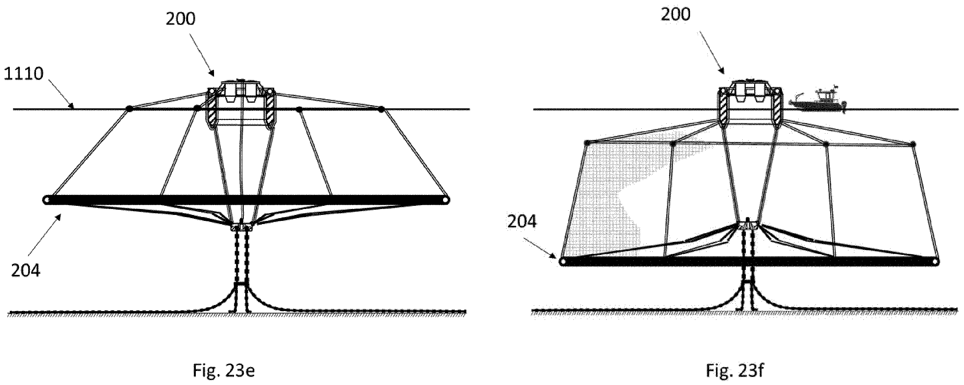

The mechanical properties of the beam (100) with respect to its bending stiffness and buckling capacity are determined by selection of materials and section areas of the membrane wall (16) and any encapsulating net (20) elements. The beam (100) can be configured to have a desirable bending stiffness about an axis transverse to the beam axis by considering: a) the aggregate sectional moment of area of all tensile materials in the wall (16) and in any encapsulating net (20) about that axis, b) the tensile modulus of those tensile materials and c) the alignment of tensile elements relative to the beam axis, especially with respect to the reinforcing fibres in the membrane wall (16) or cable elements in any encapsulating net (20). These features can be selected by design to deliver a desirable overall bending stiffness of the beam in consideration of the aquaculture applications for which examples are detailed below. For a head beam (302), such as that depicted in Figure 16b, considering a 250 mm cross-sectional diameter, a desirable bending stiffness is likely to be of the order of 100 kNm². For a sinker ring (204), such as that depicted in Figure 23, considering a 100 m toroidal diameter and 1.5 m beam section diameter, a desirable bending stiffness is likely to be of the order of 100 MNm². The bending stiffness of the tube can also be operatively varied to some degree during deployment using the inflation pressure, where cable elements in any encapsulating net (20) or the tube wall materials (16) exhibit a non-linear relationship between the applied load and material extension (i.e. a non-linear stiffness), which is the case for many materials. In this case the beam (100) may exhibit a higher bending stiffness when configured to operate at a higher inflation pressure of the tube (2) such that reinforcing elements of any encapsulating net (20) and tube wall (16) operate about a higher pre-tension and therefore exhibit a typically stiffer material characteristic. In one application, such a beam (100) can be advantageously configured to suspend a mussel culture longline (300) such that the buckling strength of the beam (100) can be used to eliminate the need for pre-tension in the external anchoring system of the longline (300), while the bending stiffness of the beam (100) can also be optimally configured to attenuate the response to high frequency or steep waves that may induce detrimental loads and accelerations in the mussel drop lines (308).

The mechanical properties of the beam (100) with respect to compressive buckling resistance strength relate also to the bending stiffness. However, the bending strength and buckling limit of this inflatable variable buoyancy beam (100), can also be operatively configured using the inflation pressure to occur when the longitudinal tensile stress at a point in the tube wall (16) due to the internal pressure is less than the longitudinal compressive stress at the same point in the tube as a result of external loads applied to the beam (100). At this point the tube wall is no longer in tension and will begin to collapse or "wrinkle" with the associated bending moment capacity referred to as the "wrinkle moment" in the art, where the "wrinkle moment" is proportional to the product of the internal pressure and the cube of the diameter of an inflatable circular tube (2) section. As such the inflation pressure of the tube (2) is operatively configured so that the tube may resist significant bending moments and compressive loads when deployed, or may be set to collapse safely at a desirable "overload" limit, while still being able to return to its form once the load is removed or it may be set so that the tube can be readily collapsed with minimal applied loads such that it can be folded for handling, transport and storage.

In its inflated and deployed form, the tube (2) may be configured to be of any desirable cross-sectional shape in order to affect the moment of area preferentially to the application, for example a non-axisymmetric bending property. The tube (2) may be axisymmetric and of circular cross-section.

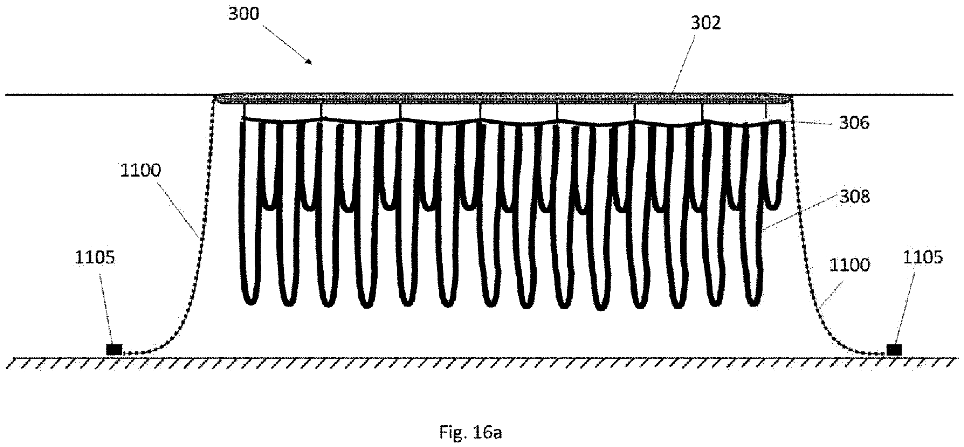

The length of the beam (100) will depend on the desired application, being at least 5 times its cross-sectional diameter. In many applications, the length of the beam will be at least 10 times its cross-sectional diameter. For longline mussel aquaculture, typical head rope (306) lengths can be 200 m or more in prior art and where a head beam (302) might be applied as depicted in Figure 16a the cross-sectional diameter will be in a range of 100 mm to 400 mm. If formed from a single head beam, the length of such a head beam (302) would be of the order of 1000 times its diameter, though practical solutions may be formed by connecting a number of head beam (302) elements to make up the required structure.

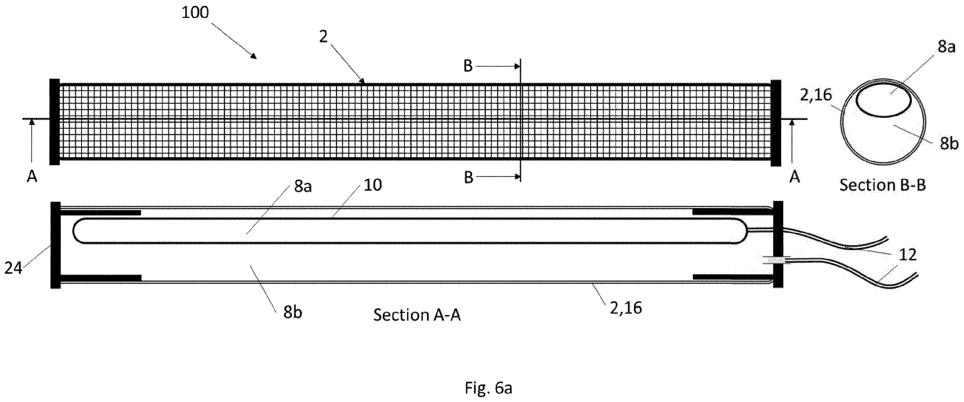

Figure 6a shows a beam (100) configured to be a generally straight beam (100) with sealed end fittings (24) that facilitate connections to moorings, aquaculture structures or other beam elements. End connections can be incorporated into the end fitting (24). The end connections may include a flanged joint to facilitate bolt fasteners or the inclusion of pad-eyes to receive conventional attachments such as shackles or other cable termination options. In one configuration, the end fitting will provide a grooved or barbed outer cylindrical surface of a diameter similar to the inner diameter of the wall (16) of the tube (2), commonly referred to as a "hose tail", in the art. With such an approach the tube (2) fits tightly over the "hose tail" forming a sealed interface between the tube (2) and the end fitting (24). Flexible sealant materials such as silicone or bitumen can be added at the interface to improve the sealing performance. The end fitting can also comprise adjustable clamps in order to apply pressure to the outside of the wall (16) of the tube to increase the contact force at the sealed interface, commonly being threaded "hose clips" in the art or segmented clamps with threaded screw features to apply a distributed contact load at the interface.

The sealed end fittings (24) can also be configured to optionally provide termination points for an encapsulating net structure (20), such that the net structure is pre-tensioned to a desirable degree upon inflation of the tube (2). The end fittings (24) can also be configured to provide threaded cable tensioners to adjust the level of pre-tension in individual cable elements (22) of the encapsulating net structure (20), similar to a "turnbuckle" or "bottle screw", which would be familiar to those skilled in the art.

Alternatively, Figure 7 shows a beam (100) configured to be a generally straight beam (100) where the membrane wall (16) is extended to form a generally continuous hemispherical or torispherical shell to seal the ends of the tube (2). In Figure 7 an encapsulating net structure (20) is shown to extend around the ends of the tube such that it can be longitudinally pre-tensioned by the pressurised tube (2) and can also be used to facilitate end-to-end connections of multiple beams using state of the art cable connectors. Cable elements (22) can be pre-tensioned by including features known in the art such as "turnbuckles" or webbing tensioners with ratchets and clamps which would be familiar to those skilled in the art.

A combination of end fittings (24) with a seat to receive a continuous extension of the membrane wall (16) can also be used to mechanically terminate and seal the end of the tube (2) to form connectable beams, tensioning features and the like.

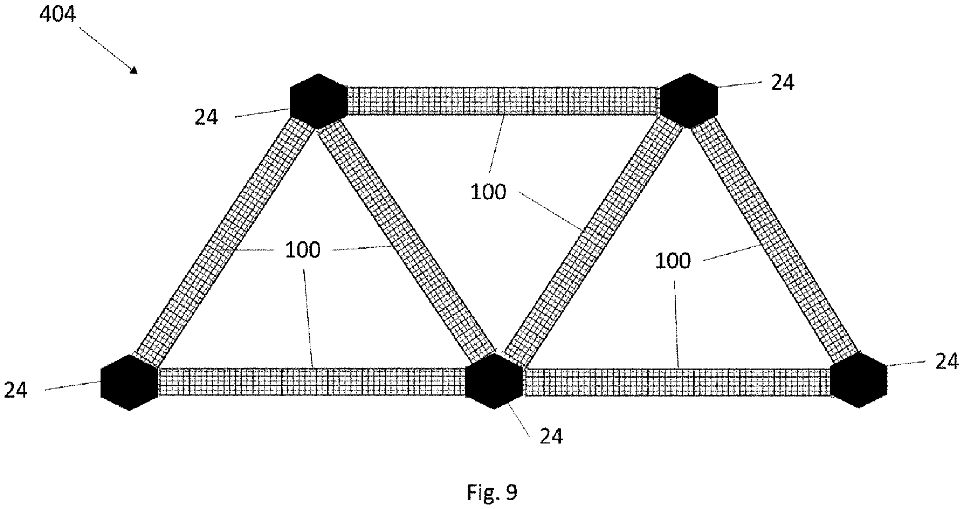

Any such variable buoyancy beam (100) can be configured to connect to one another in order to create a variable buoyancy truss structure (404) as shown in Figure 9. Such a truss may have application for marine structures generally and not necessarily restricted to aquatic structures.

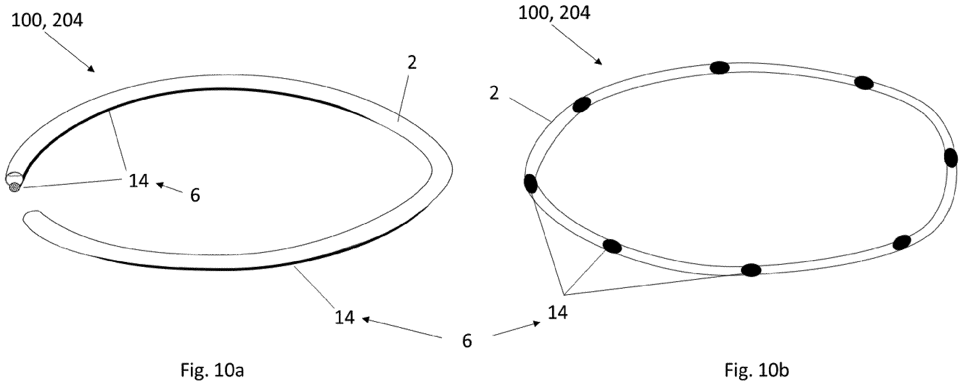

Figure 10a shows a beam (100) that is generally curved. A variable buoyancy beam (100) may be curved by a non-axisymmetric tube properties such that as the tube is inflated to induce pre-stress in the membrane wall (16) and any encapsulating net (20) that the balance of pre-stress in these elements serve to form a curved beam shape. A curved beam (100) may also be formed by an axisymmetric beam (beam) that is straight in its inflated equilibrium condition but is bent to a curved form through the application of external bending moments by connected structures or by connection of each end (24) of the beam to the other in order so that the beam's inflated equilibrium pre-stress is altered to form a toroidal beam. A curved beam that extends to the point that its ends meet each other can optionally be formed from a continuous sealed toroidal tube (2) ring without end fittings (24).

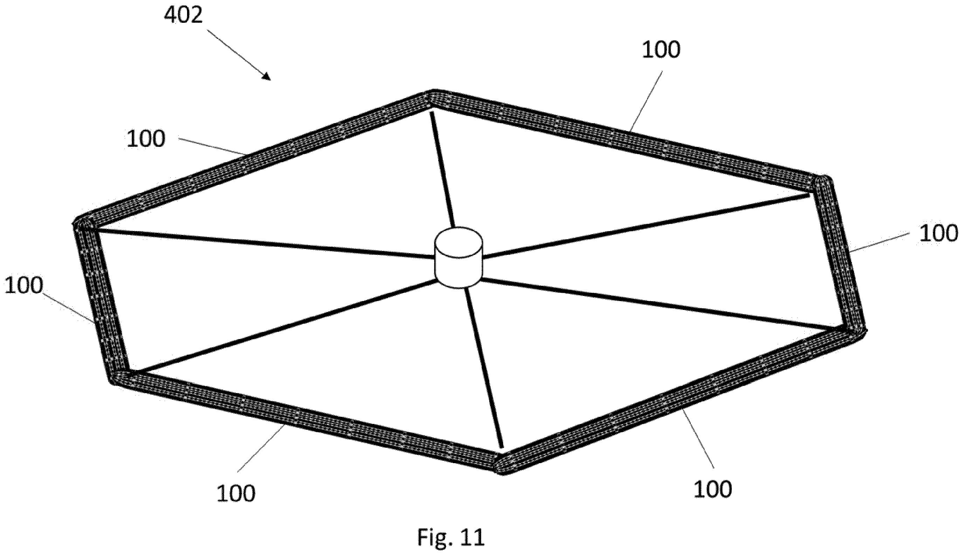

Alternatively, more than one separate straight beams (100) with sealed ends can equally be connected end-to-end to form a polygonal toroidal structure. Figure 11 shows a centrally supported toroidal beam structure (402), formed from 6 straight variable buoyancy beams (100) that are also supported by spoke elements (tendons, struts or beams) that connect the toroidal structure to a supporting hub structure.

The use of multiple separate beams (100) may be advantageous should manufacturing constraints limit the length of the individual beams (100). Separate but connected beams (100) with independently controlled buoyancy may allow control of the buoyancy distribution and floating attitude of the overall structure. This may be advantageous for operational reasons. Separate beams (100) advantageously also provide additional redundancy functions as the failure of one beam element does not necessarily result in the failure of the entire structure (200, 202, 204, 206, 300, 302, 400, 402, 404).

Two or more beams, each floating with a waterplane-area may be braced side by side in order to provide hydrostatic roll stability and potentially to support an access deck walkway structure or any other structure that requires such stability, for example for a float ring (202). Otherwise any floating or submerged beams may be braced side by side to provide desirable bending or buoyancy properties in aggregate.

Two or more fluids (8a, 8b) are used to pressurise the tube (2). In order to vary the density of the pressuring fluid, the two or more fluids (8a, 8b) must be of different densities and the ratio of those fluids (8a, 8b) in the tube (2) must be controllable. At least one of those fluids (8a, 8b) must have a density equal to or lower than that of the ambient water in which the variable buoyancy beam (100) will be submerged. The first fluid (8a) is compressible and the second fluid (8b) is incompressible. The fluids (8a, 8b) are separated from each other using at least one internal bladder (10). The use of internal bladders (10) ensures that fluids can be controlled separately and remain un-mixed for ballast control. The bladders are formed by a membrane of suitably low flexural rigidity and such that the pressure differential between the first fluid and the second fluid is small. Internal bladders (10) or other cell membranes may be advantageously used to control the movement of the varying density fluids (8a, 8b) within the tube (2) so that general internal ballast distribution is maintained. As such, the internal bladders (10) can be secured within a positional envelope within the tube (2) using ropes or other means to improve ballast stability under dynamic loading.

The bladder (10) is formed by a suitably flexible impermeable membrane that may either fully enclose a volume of the first fluid or fully enclose a volume of the second fluid or alternatively may be attached to the wall (16) of the tube (2) in such a way as to separate volumes of the two fluids (8a, 8b) enclosed by the tube wall (16) and the bladder (10) membrane. The bladder (10) is configured such that the ratio of the volume of the first fluid (8a) to the second fluid (8b) within the tube (2) may be varied. The membrane material of the bladder (10) is flexible, such that the stresses induced in the bladder (10) wall are small over the required range of volume changes and such that the difference in pressures on either side of the bladder (10) wall at a given location over the required range of volumetric variation do not exceed 2 bar, preferably not exceeding 0.5 bar. As such, the membrane material of the bladder is preferably of a flexural rigidity not exceeding 1 Nm for tubes of 500 mm diameter or smaller, where the flexural rigidity is affected by the membrane thickness and materials properties, notably the Young's modulus and Poisson's ratio. The bladder (10) membrane will have sufficient surface area to take up the required volume change or optionally be of a suitably low in-plane stiffness to stretch to the required volumes, while inducing only a limited pressure differential between the first fluid (8a) and the second fluid (8b). Suitable bladder membrane materials include but are not limited to natural or synthetic rubber sheeting such as Butyl, latex or silicone rubber, PVC, Polyurethene or Polyethelene sheet materials and rubber-coated fabric membranes using polyester, nylon or aramid fibres or other impermeable fabric materials such as those under the brand names of Dacron or Gore-Tex. Preferably the wall thickness of the bladder membrane will not exceed 2% of the beam diameter (in a range of up to 1 mm for 50 mm diameter beams and up to 30 mm for 1.5 m diameter beams, for example).

The at least one bladder (10) may comprise a plurality of internal bladders distributed at a variety of locations within the tube. Where there is a plurality of bladders, the bladders may be discretely formed, or they may be co-formed together. Optionally, such plurality of internal bladders being formed by a flexible closed cell foam structure.

In one mode of operation, the first and second fluids would be respectively air and water (suitably seawater). Air and water (suitably seawater) are advantageous as they are readily available in the ambient environment for most aquaculture structures. The internal bladders are used to store one or other of the air and water. The internal volume of the tube (2) can be operatively pressurised and depressurised through controlled movement of at least one of the first fluid (8a) or the second fluid (8b) between the exterior and the interior of the tube (2). In order to effectively control the buoyancy of the beam (100), the ratio of the first fluid (8a) to the second fluid (8b) is carefully controlled. In use, the tube (2) may be filled completely with either the first fluid (8a) or the second fluid (8b) or a combination thereof. It will be appreciated that within the present context, a fluid may be a liquid or gas. Examples of suitable fluids are air and saltwater. It will be understood however that the other fluids can be used to effect a variation in the pressure of the tube (2) and a change of buoyancy of the overall beam within the present context.

In order to use air as the first fluid (8a), a single pressurised manifold of air can be connected to a plurality of internal bladders (10) at locations around the tube (2) by pipes and controllable valves (30). Optionally, the control valves can be solenoid control valves or other actuated valves to effect active logical control of fluid flows. In such an arrangement the internal volume of the tube is segmented into discrete smaller volumes and the volume of air within the individual segments can be individually varied with a resultant change in buoyancy and buoyancy distribution within the beam (100). Segmented fluid volumes that restrict the movement of fluids within the tube (2) are important where such movement of fluid ballast may result in loss of stability of the beam (100) and its connected structures (200,300,400,402,404).

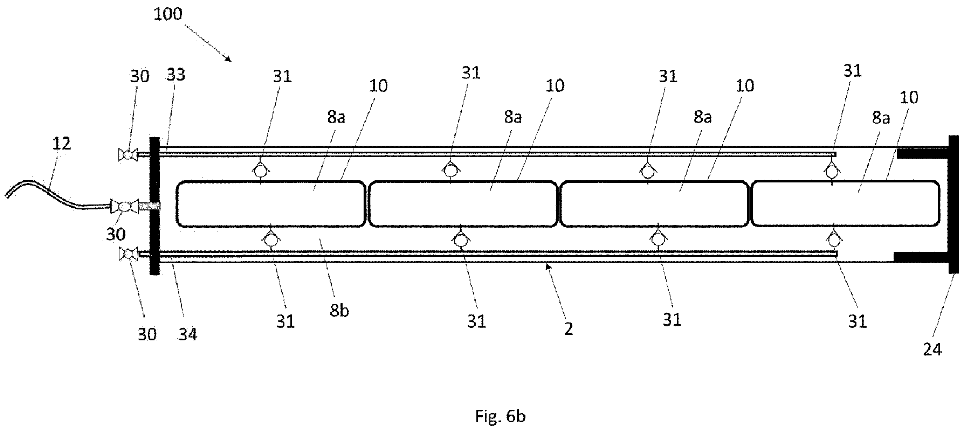

In one arrangement, as shown in Figure 6b, a variable buoyancy beam is provided with a plurality of internal bladders (10). The individual internal bladders (10) are inflated from a single common inflation manifold (33) with check valves (31) at the inlet to each bladder (10).

The check valves (31) passively prevent the movement of fluid between individual bladders (10) connected to the single common inflation manifold (33).

At the same time, the check valve and common inflation manifold allow all bladders to be inflated from a common external inlet to a common inflation pressure. In this case, a second common manifold (34) connecting the plurality of internal bladders (10) can be configured to allow deflation with check valves (31) at the outlet from each bladder. The check valves (31) will again prevent the movement of fluid between individual bladders connected to the single common deflation manifold (34), while allowing all bladders to be deflated to a common external outlet to a common deflation pressure, including to affect the full volumetric collapse of the plurality of internal bladders (10). The two manifold system described here using check valves (31) allows inflation and deflation of a plurality of internal bladders (10) from two external connections. At the same time, the arrangement prevents fluid flow between the internal bladders (10) in response to attitude changes of the beam (100) under dynamic loading. Advantageously, this solution requires no active control of internal valves.

An alternative approach uses 2-way pressure relief valves, such that a threshold pressure differential must be reached before fluid will transfer between individual bladder (10) volumes, such threshold pressure set so that fluid transfer does not occur under installed operating conditions but can be operatively made to occur during inflation and deflation of the beam (100).

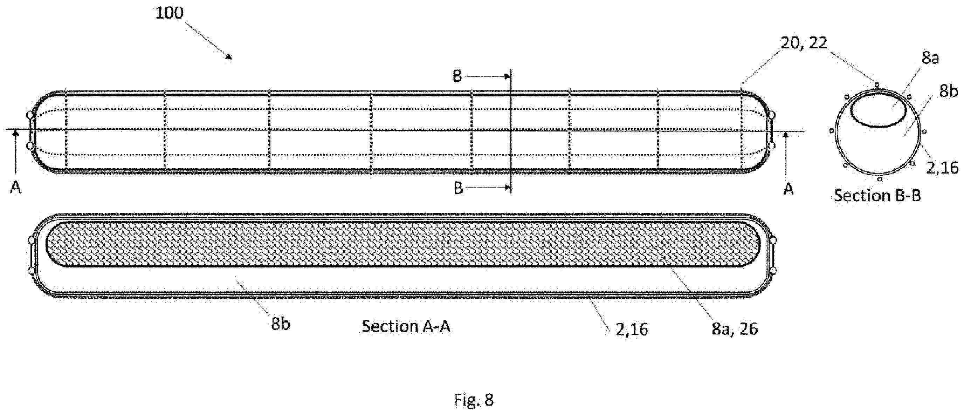

An alternative arrangement as shown in Figure 8 employs a closed-cell foam (26) to contain the first fluid (8a) so that general movement of the fluids along the beam is then greatly reduced. A drawback of this approach is that It difficult to change the mass of fluid contained in the closed cell foam and/or to affect the collapsing of the structure.

One arrangement provides a fixed mass of air (8a), pre-installed in one or more bladders (10) or in closed-cells foam (26), with no connections, i.e. the mass of air, the first fluid (8a), within the tube is fixed at deployment. In this case, a change in volume of air will be operatively affected through its compressibility, under pressurisation of the second fluid (8b), which will determine the overall variation in buoyancy and any internal pressure exerted on the tube wall (16), and its resultant rigidity.

In order to use water, for example seawater, as the second fluid (8b), a pump may be provided in fluid communication with one or more points around the tube (2) to deliver water at elevated pressures and/or to extract water from the internal volume of the tube to reduce the pressure in the tube. A shut-off valve (30) and/or check valve (31) can be included for each connection.

It is noteworthy that air is a low-density compressible fluid, while water is a substantially incompressible fluid of a density equal or similar to the ambient fluid in which the beam (100) is immersed. Since air is the first fluid (8a) and seawater is the second fluid (8b), where the mass of air within the tube (2) is fixed, the buoyancy of the beam (100) can be reduced by adding water to the interior of the tube (2) in a manner such that the fixed mass of air (8a) is compressed to a reduced volume with a correspondingly reduced buoyancy. For a floating beam (100), this can be used advantageously to simultaneously increase beam stiffness and to reduce the freeboard of the beam in order to attenuate wave-induced response of the structure, such as a mussel longline (300). Where the beam (100) also includes a negatively buoyant constituent (6), water can be added to reduce the volume of air to the point at which no longer provides sufficient buoyancy to keep the beam (100) afloat. By continuing to add water to a beam (100) with a negatively buoyant constituent (6) the volume of air can be reduced to the point at which it is strongly negatively buoyant. A negatively buoyant beam (100) can be deployed advantageously to aquaculture structures that may require a negatively buoyant pre-tensioning force, such as for a sinker ring (204) as depicted in Figure 22 and Figure 23. The fixed mass of air (8a) may be pressurised to approximately 10 bar thus resulting in a substantial reduction of volume of the fixed mass of air (8a). The increased pressure in the tube (2) also affects the desired stiffness and buckling strength of the beam (100) in its reduced buoyancy, pressurised condition.

In order to provide additional buoyancy to the beam (100), valves (30,35) can be opened such that the energy stored in compressed air (8a) pressure pushes water (8b) out of the interior of the tube (2) and such that the buoyancy is increased in a controlled way as the air (8a) expands to displace the emitted water (8b). It will be appreciated that such an operation will also need to consider the effects of ambient pressure at the installed depth. Tube inflation pressures up to the order of 10 bar over the ambient are anticipated, which may be at depths in the range of 5m to 50m (0.5 to 5 bar ambient pressures). Importantly, the fluid density and pressure can be controlled by adding or removing water only, such that a fixed mass of compressible air in the tube (2) would change volume correspondingly as water is introduced / removed from the internal volume, to effect a density change due to the variation of the ratio of the fluids (8a and 8b). This means a good level of control can be achieved by exchanging only water with the internal tube (2) volume. Advantageously, this requires only one control umbilical (12) and the stored energy in the compressed air can be used to de-ballast the beam (100) and thus any attached aquaculture structure (200) simply by allowing internal water to be released to the ambient environment at a controlled rate.

This arrangement also presents an opportunity to optionally include a pressure-actuated or a float-actuated valve (35). The valve (35) is fluidly connected to the water in the beam. This valve (35) is suitably configured to passively open when a submergence threshold for the beam is exceeded. As the valve is opened, water ballast (8b) is released to increase buoyancy. Once beam submergence is returned to threshold level, the valve passively closes.

The use of such a valve, advantageously, presents an opportunity to passively compensate for increases in biomass on attached structures (4,308,312) so that a desired beam submergence envelope is maintained as biomass accumulates on attached structures.

Other advantages of using a compressible fluid for the internal fluid (8a) relates to managing the consequence of failures of the tube (2), wherein if a leak develops in the tube (2), the pressure will vary more slowly due to the accumulated energy of compressed air. Furthermore, any leak will result in an increase in the overall buoyancy of the beam (100) as compressed air expands to take up more volume, such that the structure will tend to rise to the surface where repairs can be affected, rather than sink to the seabed.

### A) Finfish Aquaculture

The use of the beams (100) above will now be described with reference to an exemplary deployment, comprising a variable buoyancy beam (100) deployed in a floater ring (202), a sinker ring (204) and a vertical spar (206) for an aquaculture fish pen structure (200).

It will be appreciated that whilst the term ring has been employed, i.e. "Floater ring" or "sinker ring", that it is not intended that they be limited in structure to a true ring type geometry and it will be appreciated that the structural form may adopt any number of shapes which fulfil the flotation or sinking function as exemplified in the following description.

As exemplified with initial references to Figure 2a and Figure 2b, a floater ring (202) may be formed by a variable buoyancy beam (100), which comprises a hollow tube (2) configured to retain at least a first fluid (8a) and second fluid (8b). The beam (100) has a variable buoyancy and, by changing the buoyancy of the beam (100), it is possible to control the freeboard or residual buoyancy of the floater ring (202) as well as compensate for any changes in the gravity loads applied to the floater ring (202) by the attached net (4), sinker ring (204) or anchor (1105) connections. To entrap the fluids, the beam (100) is selected to be impermeable. For ease of storage, transport and deployment, the hollow tube (2), should be sufficiently flexible to allow it to be collapsed and folded.

A sinker ring (204) is formed by one or more variable buoyancy beams (100), which comprise a hollow tube (2) formed with a membrane wall (16), configured to retain at least a first fluid (8a) and second fluid (8b), and a negatively buoyant constituent (6). The beam or beams (100) employed for the sinker ring have a variable buoyancy and, by changing the buoyancy of the beam (100), it is possible to facilitate installation and a periodic raising/lowering of the sinker ring (204) to facilitate various activities such as crowding of fish for treatments or harvesting, net (4) installation and removal, the submergence of nets (4) to protect against wave loading or parasite / algae infestations or the raising of nets (4) for cleaning and inspection near the surface.

In addition, and per conventional and known usage of sinker rings (504), the sinker ring (204) in its fully submerged, minimum buoyancy state, also maintains negative buoyancy forces within the overall aquaculture pen structure (200) and maintains pre-tension in the net (4) by applying a counter-posing gravity force to the positively buoyant floater ring (202). The bend resistance and the buoyancy of the variable buoyancy beam (100) used in the floater ring (202) and in the sinker ring (204) are configured to advantageously maintain maximum containment volume of the attached tensile net (4) under loading from currents, independently of the need to apply pre-tension from external anchor loads, whilst also attenuating the response to wave loading or dynamic operating loads that may result in detrimental loads and accelerations being imparted to the net (4). In effect, the normal usage of a sinker ring (504) to maintain downward pressure on the netting of the aquaculture pen structure is provided by the one or more variable buoyancy beams (100) while the normal usage of a floater ring (502) to maintain positive buoyancy and overall heave stability of the aquaculture pen structure is also provided by the one or more variable buoyancy beams (100) in accordance with the present teaching.

Suitably, the floater ring (202) and the sinker ring (204) comprising the one or more variable buoyancy beams (100) differ from a conventional floater ring (502) and sinker ring (504) in that the one or more variable buoyancy beams (100) can be collapsed and folded when the first fluid (8a) and second fluid (8b) are removed from the hollow tube (2) such that there is insufficient internal pressure to maintain pre-tension in the membrane wall (16).

This provides a significant advantage allowing for ease of storage, deployment and retrieval.

Furthermore, the floater ring (202) and the sinker ring (204) comprising the one or more variable buoyancy beams (100) differ from a conventional floater ring (502) and sinker ring (504) in that the bending stiffness of the one or more variable buoyancy beams (100) can be optimally configured by selection of the tensile properties of the membrane wall (16) and encapsulating net (20), as well as operatively controlled by variation of the internal pressure of the tube (2) when any of the first fluid (8a) and second fluid (8b) are added or removed from the hollow tube (2).

Suitably, the floater ring (202) comprising the one or more variable buoyancy beams (100) differs from conventional floater rings (502) in that it can be configured to adopt a floating state of variable emergence or a fully-submerged state of variable buoyancy through selective variation of the ratio of the first fluid (8a) to the second fluid (8b) within the tube, thereby enabling the dynamic response of the floater ring to waves to be optimised, while also allowing the buoyancy to be adjusted to compensate for biomass growth in attached structures, for example. Importantly, the first fluid (8a) and the second fluid (8b) are separated by means of an internal bladder (10) or a plurality of internal bladders (10) such that their volume may be independently controlled and segmented to maintain general ballast stability.

The sinker ring (204) may comprise a variable buoyancy beam (100) that includes also a negatively buoyant constituent (6) differs from conventional sinker rings (504) in that it is configured to adopt either a positive buoyancy mode (to float to the surface to aid operations) or a negative buoyancy mode (to act as a net tensioning feature). It is possible to switch between positive buoyancy or negative buoyancy once or multiple times with relative ease as required.

In respect of the application to a sinker ring (204), in addition to the pressurised fluids (8a, 8b) inside the tube (2) of the one or more variable buoyancy beams (100), a constituent is required in order to assist in making the sinker ring (204) negatively buoyant. The negative buoyancy constituent (6) may be provided in the form of a high-density ballast material (14) which in turn may be distributed along and around the tube (2) so as to maintain the stability of the tube in a substantially horizontal plane. In this context, a high-density ballast material (14) is a material with a density which is greater than the density of seawater. The high-density ballast material (14) would thus be negatively buoyant in seawater if it were placed in seawater in isolation. As the high-density ballast material (14) is not placed in the water in isolation, but is part of the one or more variable buoyancy beams (100) forming the sinker ring (204) - the negative buoyancy of the high-density ballast material (14) works against the positive buoyancy of at least one of the fluids (8a, 8b) in the tube (2). Thus, the gradual reduction of buoyancy due to the variation of the ratio of fluids (8a, 8b) will result in the effect of the high-density ballast material (14) becoming increasingly dominant until a threshold is reach wherein the sinker ring (204) is neutrally buoyant.

Further reduction of buoyancy due to the variation of the ratio of fluids (8a, 8b) beyond this point will cause the sinker ring (100) to become increasingly negatively buoyant.

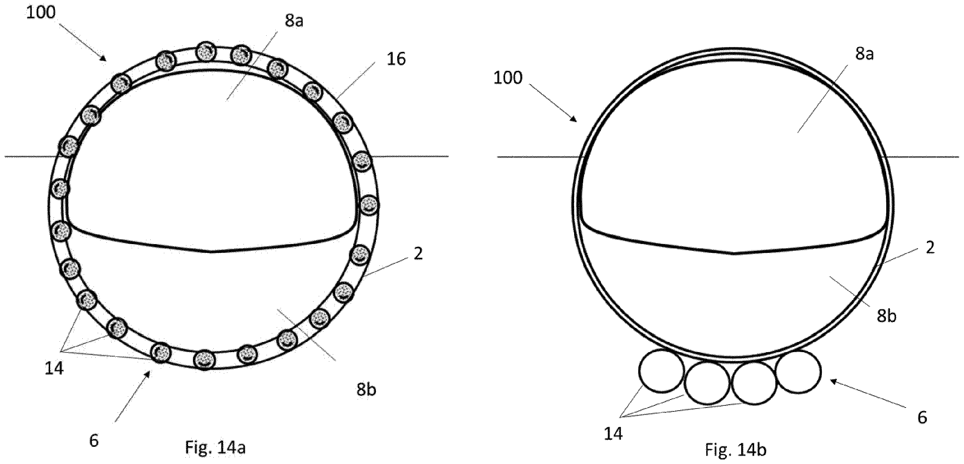

The density of the high-density ballast material (14) should be significantly more than that of the ambient water, preferable in excess of 3000 kg/m³ and ideally in the density ranges of ferrous metals (7000 - 8000 kg/m³). The high-density ballast material (14) will be of fixed mass, using either a number of discrete weights or a continuous, dense but pliable structure along the length of the tube (2) such as a chain, steel rope, or wire such as shown in Figure 14a and 14b or unconsolidated sediment aggregates, so that the tube (2) retains its characteristic feature of being collapsible, foldable and/or easily transported.

The high-density ballast material (14) can be installed inside the enclosed volume of the tube (2) or integrated with the collapsible membrane wall (16) of the tube (2), potentially as a reinforcing structural material, or it can be suspended outside but integral to the tube (2), potentially forming a part of the encapsulating net structure (20)

In the arrangement of a variable buoyancy beam (100) applied to a sinker ring (204), the high-density ballast material (14) will be formed by a steel wire rope installed along the length, and extending circumferentially about, the tube (2), potentially forming part of an encapsulating net structure (20). This advantageously provides a redundant structural element, if the tube (2) structure fails.

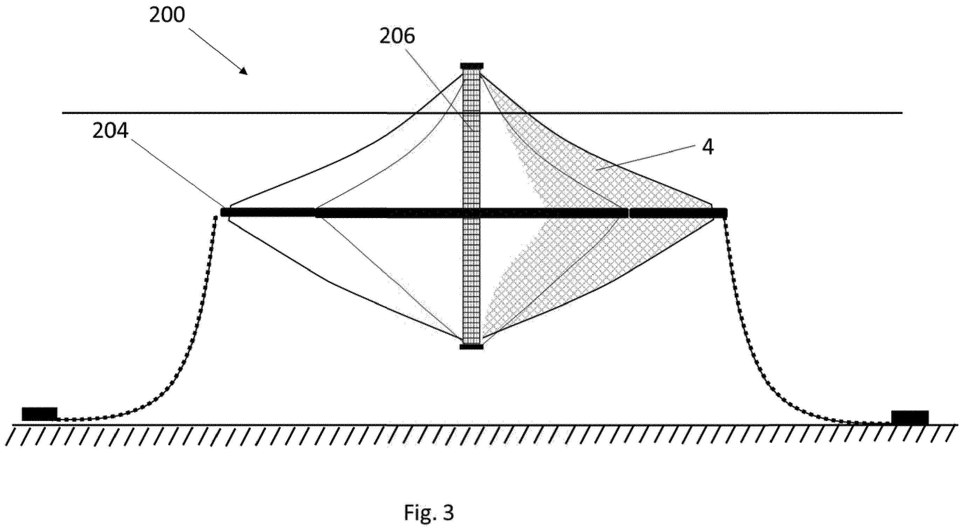

There are known examples of fish pens in prior art that do not use beams oriented in the horizontal plane to suspend containment nets. As exemplified with reference to Figure 3, a fish pen that uses a central spar (206) in a generally vertical orientation in conjunction with a sinker ring (204) structure may be used in order to suspend a pre-tensioned net (4).

The central spar (206) of which may be formed by one or more variable buoyancy beams (100) as referenced above, which comprise a hollow tube (2) formed with a membrane wall (16), configured to retain at least a first fluid (8a) and second fluid (8b). The beam (100) has a variable buoyancy and, by changing the buoyancy of the variable buoyancy beam (100), it is possible to control the emergence of the central spar as well as to compensate for any changes in the gravity loads applied to the central spar (206) by the attached net (4) or sinker ring (204).

The vertical spar (206) comprising one or more variable buoyancy beams (100) differs from a conventional vertical spar structures used to support aquaculture nets in that the one or more variable buoyancy beams (100) can be inflated in order to apply tension to the net (4) and also collapsed and folded to support operations by selectively adding or removing either the first fluid (8a) or second fluid (8b) from the hollow tube (2) such that the pre-tension in the membrane wall (16) is selectively varied to provide the desired mechanical properties of the variable buoyancy beam (100).-

### B) Shellfish & Seaweed Culture

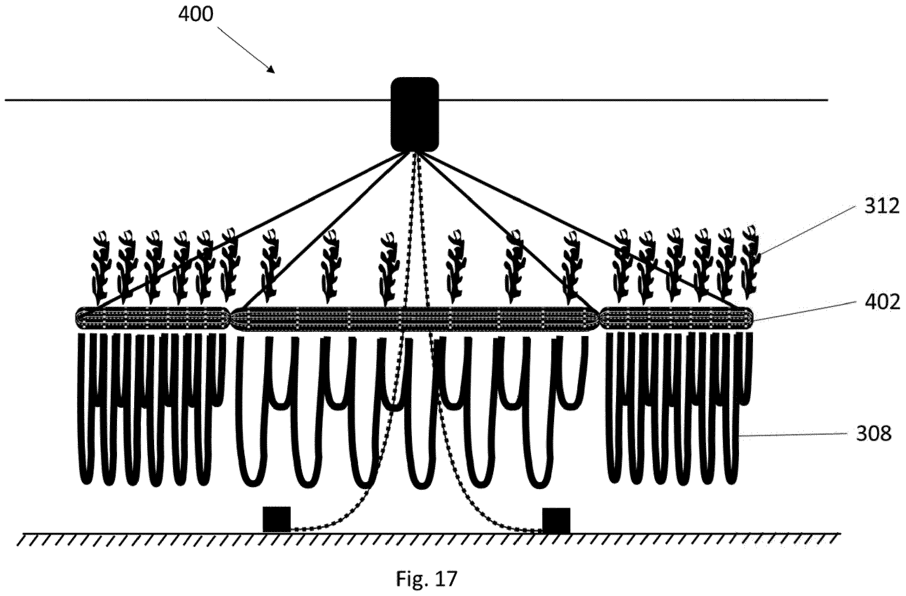

A head beam (302) for a mussel culture system (300) employing a variable buoyancy beam (100) adapted for the culture of seaweed, shellfish or other aquaculture biomass may be provided as shown in Figure 16. A centrally-supported polygonal ring (402) adapted for the culture of seaweed, shellfish or other aquaculture biomass may be provided as shown in Figure 17.

Figure 4 provides a general layout of a mussel culture longline (300) as is known in the prior art. As detailed in the background section, these longlines (300) comprise a number of individual floats (304), suspending a head rope (306), from which a drop rope (308) is suspended at regular intervals through the water column to provide a substrate for the culture of shellfish such as mussels. The floats (304) of the prior art are not configured for variable and controllable buoyancy. The head rope (306) of prior art is not configured to resist compressive loads along its length, such that an external pre-tension must be applied by external anchors (1105) via the mooring (1100) in order to prevent the longline system (300) form collapsing on itself. In addition, the prior art floats (304) are not easily collapsible or inflatable.

The floats (304) may be replaced by a variable buoyancy beam (100) of the type described generally herein arranged in a vertical orientation. In this vertical orientation, the beam may be attached at one end to the head rope (306). Such beams (100) advantageously being configured to have a variable buoyancy that can passively compensate for the growth of biomass on drop ropes (308) and optionally being configured to be flexible in bending in order to attenuate wave loads being transmitted to the head rope (306) by the beam (100).

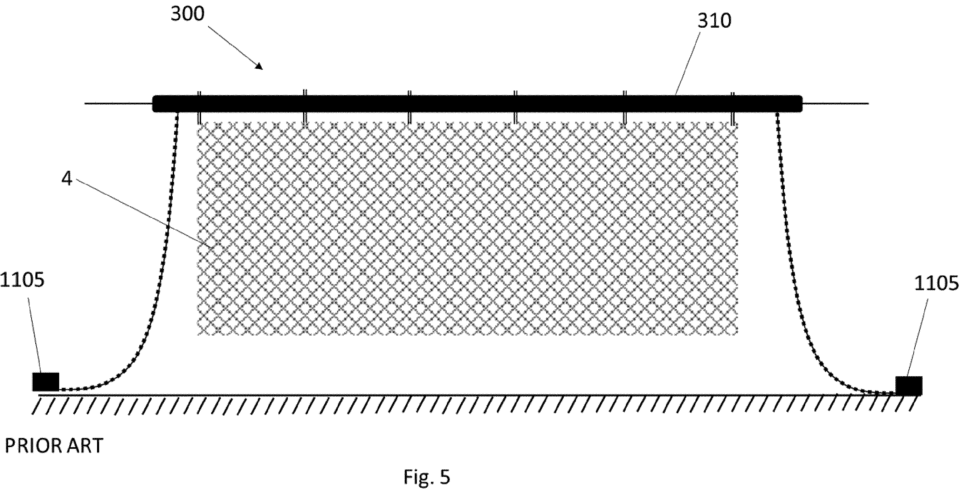

Figure 5 provides a general layout of a mussel culture system (300) known in prior art, where a rigid pipe flotation (310) is used to suspend a net (4) through the water column to provide a substrate for the culture of shellfish such as mussels. The pipe flotation (310) of the prior art is not configured to be easily collapsible or inflatable or to have selectable bend stiffening properties to mitigate the dynamic response of the flotation to waves. The pipe flotation (310) of the prior art is not configured to have a variable buoyancy such that the freeboard can be kept low to reduce the wave-induced response, while also being able to compensate for the growth in biomass on the suspended net to maintain general stability.

Figure 16a illustrates a general layout of a mussel culture system (300) in accordance with the present teaching. The mussel culture system (300) comprises a head beam (302) formed by one or more variable buoyancy beams (100), which comprise a hollow tube (2) formed with a membrane wall (16), configured to retain at least a first fluid (8a) and second fluid (8b). The membrane wall is impermeable. At the same time, the membrane wall (16) is suitably selected so that when fluid is removed from the beam (100), the beam (100) may collapse upon itself. For ease of storage and deployment/retrieval, the beam is preferably foldable when collapsed. The beam (100) has a variable buoyancy and, by changing the buoyancy of the beam (100), it is possible to control the freeboard or residual buoyancy of the head beam (302) as well as compensate for any changes in the gravity loads applied to the head beam (302) by the attached mussel culture drop ropes (308). In one arrangement, the variable buoyancy beam (100) of the head beam (302) is encapsulated in a rope net (20), such that the net provides attachment points for the drop ropes (308) or a head rope (306).

The bending stiffness and strength of the head beam (302) are configured to optimally attenuate the dynamic response of the head beam (302) to high frequency or steep waves by selection of suitable materials and section areas of the membrane wall (16) and any encapsulating net (20) elements. The bending stiffness and buckling strength of the head beam (302) are operatively varied using the inflation pressure, where cable elements in any encapsulating net (20) or the tube wall materials (16) exhibit a non-linear relationship between the applied load and material extension (i.e. a non-linear stiffness), which is the case for many materials. In this case the beam (100) will exhibit a higher bending stiffness when configured to operate at a higher inflation pressure of the tube (2) such that reinforcing elements of any encapsulating net (20) and tube wall (16) operate about a higher pre-tension and therefore exhibit a typically stiffer material characteristic. The head beam (302) may be advantageously configured to suspend a mussel culture longline (300) such that the buckling strength of the beam (100) can be used to eliminate the need for pre-tension in the external anchoring system of the longline (300), while the bending stiffness of the beam (100) can also be optimally configured to attenuate the response to high frequency or steep waves that may induce detrimental loads and accelerations in the mussel drop lines (32).

Figure 17 illustrates a general layout of an exemplary mussel and seaweed culture system (400) in a normal operating position. The mussel and seaweed culture system (400) comprises a centrally-supported polygonal ring (402) attached to a floating hub structure. The centrally-supported polygonal ring is formed by one or more variable buoyancy beams (100), which comprise a hollow tube (2) formed with a membrane wall (16), configured to retain at least a first fluid (8a) and a second fluid (8b). As with the other beams described herein, the membrane wall is impermeable. With the beam being collapsible when the fluid(s) are substantially removed and foldable once collapsed. In one arrangement the one or more variable buoyancy beams (100) of the centrally-supported polygonal ring (402) are encapsulated in a rope net (20) and optionally includes a negatively buoyant constituent (6). The one or more beams (100) have a variable buoyancy and, by changing the buoyancy of the one or more beams (100), it is possible to control the freeboard or residual buoyancy of the centrally-supported polygonal ring (402) as well as compensate for any changes in the gravity loads applied to the ring (402) by any attached mussel culture drop ropes (308) or attached seaweed biomass (312). It is further possible to fully submerge the centrally-supported polygonal ring (402), which can be stabilised about a hub structure by the elastic properties of the centrally supported polygonal toroid (402) such that its level of submergence can be configured or varied depending on the buoyancy of the of the one or more variable buoyancy beams (100), including through the application of a pressure-activated or float-activated valve (35) as described above to release water when submergence exceeds a threshold in response to biomass weight increases.

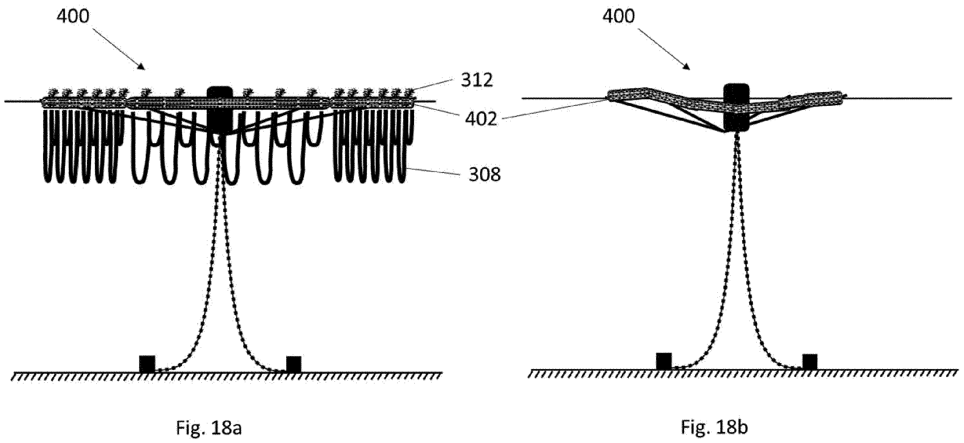

Figure 18a shows a mussel and seaweed culture system (300) based on a centrally supported polygonal ring (402) attached to a floating hub structure, whereby the ring (402) is de-ballasted to the surface for operational purposes such as inspection, harvest or maintenance.

Figure 18b shows a mussel and seaweed culture system (300) based on a centrally supported polygonal ring (402) attached to a floating hub structure such that the ring (402) is collapsed and in a buoyant condition as part of installation and/or demobilisation operations.

The present application will now be further described with reference to a sinker ring (204) for an aquaculture pen structure (200). A "sinker ring" is not limited to a structure having a true ring type geometry and it will be appreciated that the structural form may adopt any number of shapes which fulfil the sinker function as will now be explained with reference to Figures 2a and 2b, in which a sinker ring (204) is provided.

As with other examples, the ring is formed using at least one beam comprising a hollow tube (2) configured to retain at least a first fluid (8a) and a second fluid (8b). Additionally, the tube is provided with a negatively buoyant constituent (6). The sinker ring (204) has a variable buoyancy and, by changing the buoyancy of the sinker ring (204), it is possible to facilitate installation and a periodic raising/lowering of the sinker ring (204) to facilitate various activities such as crowding of fish for treatments or harvesting, net (4) installation and removal, the submergence of nets (4) to protect against wave loading or parasite / algae infestations or the raising of nets (4) for cleaning and inspection near the surface. In addition, and per conventional and known usage of sinker rings, the sinker ring (204) in its fully submerged, minimum buoyancy state, also maintains negative buoyancy forces within the overall aquaculture pen structure (200) and advantageously maximises the volume of the aquaculture pen structure (200) whilst also reducing impulsive loading or dynamic operating loads that may be applied to the aquaculture pen structure (200) by the environment or under marine operations. In effect, the normal usage of a sinker ring (504) to maintain downward pressure on the netting of the aquaculture pen structure is provided by a sinker ring (204) in accordance with the present teaching.

The sinker ring (204) differs from conventional sinker rings (504) in that it is configured to adopt either a positive buoyancy mode (to float to the surface to aid operations) or a negative buoyancy mode (to act as a net tensioning feature). It is possible to switch between positive buoyancy or negative buoyancy once or multiple times with relative ease. The internal volume of the tube (2) is preferably filled with a first fluid (8a) and a second fluid (8b) of different densities. The buoyancy in any one instance is related to the extent by which the tube (2) is filled with at least a first fluid (8a) or a second fluid (8b) or a combination of both fluids. The internal volume of the tube (2) can be operatively pressurised and depressurised through controlled movement of at least one of the first fluid (8a) or the second fluid (8b) between the exterior and the interior of the tube (2). To effectively control the buoyancy of the sinker ring (204), the ratio of the first fluid (8a) to the second fluid (8b) is carefully controlled. A bladder is employed to separate the two fluids. In use, the tube (2) may be filled completely with either the first fluid (8a) or the second fluid (8b) or a combination thereof. It will be appreciated that within the present context, a fluid may be a liquid or gas. Examples of suitable fluids are air and saltwater. It will be understood that other fluids can also be used to affect a variation in the pressure of the tube (2) and a change of buoyancy of the overall sinker tube.

To use air as the first fluid (8a), a single pressurised manifold of air can be connected to a plurality of internal bladders (10) at locations around the tube (2) by pipes and controllable valves. In such an arrangement the internal volume of the tube is segmented into discrete smaller volumes and the volume of air within the individual segments can be varied with a resultant change in buoyancy of the sinker ring. An alternative approach provides a fixed mass of air installed in one or more bladders with no connections, i.e. the mass of air, the first fluid, within the tube is fixed. In this case, a change in volume of air will be affected through its compressibility, under pressurisation of the second fluid, which will determine the overall variation in buoyancy and any internal pressure exerted on the tube, and its resultant rigidity.

To use seawater as the second fluid (8b), a pump will be provided in fluid communication with one or more points around the tube (2) to deliver seawater at elevated pressures and/or to extract seawater from the internal volume of the tube to reduce the pressure on the tube. A shut-off valve and/or check valve can be included for each connection.

As with the other examples, the beam (tube) may be (2) at least partially collapsible.

A collapsible tube (2) is advantageous as it means that the whole sinker ring is partially collapsible and can be more easily stored and moved on site or within harbours. The tube (2) of the collapsible sinker ring (204) may be inflated (or filled by any other means) to pressurise the collapsible sinker ring (204) such that it forms a substantially rigid support member. As with the other examples, the tube wall may be a rubber coated fabric or other membrane material such as for example PVC plastic sheeting or impermeable textiles (canvas, gortex etc). Such a construction means that the tube wall does not provide a large resistance to bending when the tube is unpressurised. Although the tube will be formed from typical sheet membrane materials, the thickness of materials could be significant at the intended scale (up to 5% of the tube diameter and so up to 50 mm on a 1 m diameter tube) and some moderate bending loads may still be needed to effect collapsibility of the tube.

To vary the density of the pressuring fluid, the two or more fluids (8a, 8b) must be of different densities and the ratio of those fluids (8a, 8b) must be controllable. Suitably, one of those fluids (8a, 8b) should have a density equal to or lower than that of the ambient water in which the sinker ring (204) will be submerged.

The tube (2) may be formed from a number of individual beam (100) elements joined end to end. Separate beam elements may be advantageous should manufacturing constraints limit the length of the individual beams. Separate beam elements enable the lifting of one side of the sinker ring whilst the other side of the sinker ring remains at a lower position. This may be advantageous for operational reasons. Separate beam elements advantageously also provided additional redundancy functions as the failure of one beam element does not result in the failure of the entire tube.

It is noteworthy that air is a low-density compressible fluid, while sea water is a substantially incompressible fluid of a density equal to the ambient fluid in which the sinker ring (204) is immersed. Since air is the first fluid (8a) and seawater is the second fluid (8b), where the mass of air within the tube (2) is fixed, the buoyancy of the sinker ring (204) can be made negative by adding seawater to the interior of the tube (2) in a manner such that the fixed mass of air (8a) is compressed to a volume with a corresponding density which no longer provides sufficient buoyancy to keep the sinker ring (204) afloat. In such an approach, the fixed mass of air (8a) may be pressurised up to the order of 10 bar above ambient pressure by adding seawater, thus resulting in a substantial reduction of volume of the fixed mass of air (8a). Where the sinker ring (204) is collapsible, the increased pressure in the tube (2) affects the desired rigidity of the sinker ring (204) in its submerged, pressurised condition. To raise the sinker ring (204), valves can be opened such that the air (8a) pressure pushes seawater (8b) out of the interior of the tube (2) and such that the buoyancy is increased in a controlled way as the air (8a) expands to displace the emitted seawater (8b). It will be appreciated that such an operation may also need to consider the effects of ambient pressure at the installed depth. Tube inflation pressures of the order of 10 bar over the ambient are anticipated, which may be at depths in the range of 10m to 50m (1 to 5 bar ambient pressures). Importantly, the fluid density and pressure can be controlled by adding or removing water only, such that a fixed mass of compressible air in the tube (2) would change volume correspondingly as water is introduced / removed from the internal volume, to affect a density change due to the variation of the ratio of the fluids. This means a good level of control can be achieved by exchanging only water with the internal tube (2) volume. Advantageously, this requires only one control umbilical (12) and the stored energy in the compressed air can be used to de-ballast the tube (2), and thus the sinker ring (204), simply by allowing internal water to be released to the ambient environment at a controlled rate.

In addition to the pressurised fluids (8a, 8b) inside the tube (2), a constituent may be required to assist in making the sinker ring (204) negatively buoyant. This negative buoyancy constituent (6) may be provided in the form of a high-density ballast material (14) which is distributed along and around the tube (2) to maintain the stability of the tube in a substantially horizontal plane. In this context, a high-density ballast material (14) is a material with a density which is greater than the density of seawater. The high-density ballast material (14) would thus be negatively buoyant in seawater if it were placed in seawater in isolation. As the high-density ballast material (14) is not placed in the water in isolation, but is part of the sinker ring (204), the negative buoyancy of the high-density ballast material (14) works against the positive buoyancy of at least one of the fluids (8a, 8b) in the tube (2). Thus, the gradual removal of at the fluids (8a, 8b) which provides positive buoyancy will result in the effect of the high-density ballast material (14) becoming increasingly dominant until a threshold is reach wherein the sinker ring (204) is neutrally buoyant. Further removal of the fluid (8a, 8b) which is provides positive buoyancy beyond this point will cause the sinker ring (204) to become increasingly negatively buoyant.

The density of the high-density ballast material (14) should be significantly more than that of the ambient water, preferable in excess of 3000 kg/m³ and ideally in the density ranges of ferrous metals (7000 - 8000 kg/m³). The high-density ballast material (14) will be of fixed mass, using either a number of discrete weights or a continuous, dense, but pliable structure along the length of the tube (2) such as a chain, steel rope, or wire such as shown in Figure 14a and 14b or unconsolidated sediment aggregates, so that the tube (2) retains its characteristic feature of being collapsed, folded and/or easily transported.

The high-density ballast material (14) can be installed inside the enclosed volume of the tube (2) or integrated with the collapsible wall (16) of the tube (2), potentially as a reinforcing structural material, or it can be suspended outside but integral to the tube (2).

In one arrangement, the high-density ballast material (14) will be formed by a steel wire rope installed along the length, and extending circumferentially about, the tube (2). This advantageously provides a redundant structural element if the tube (2) structure fails.

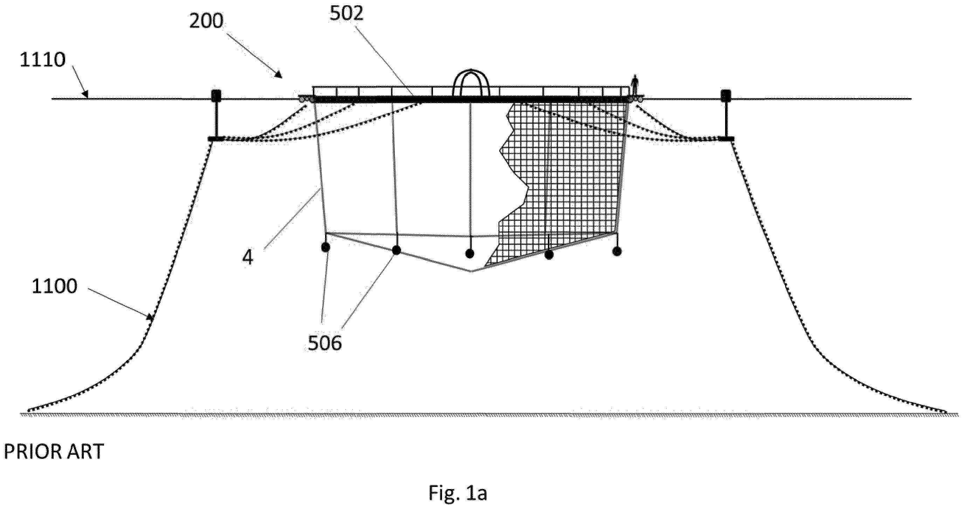

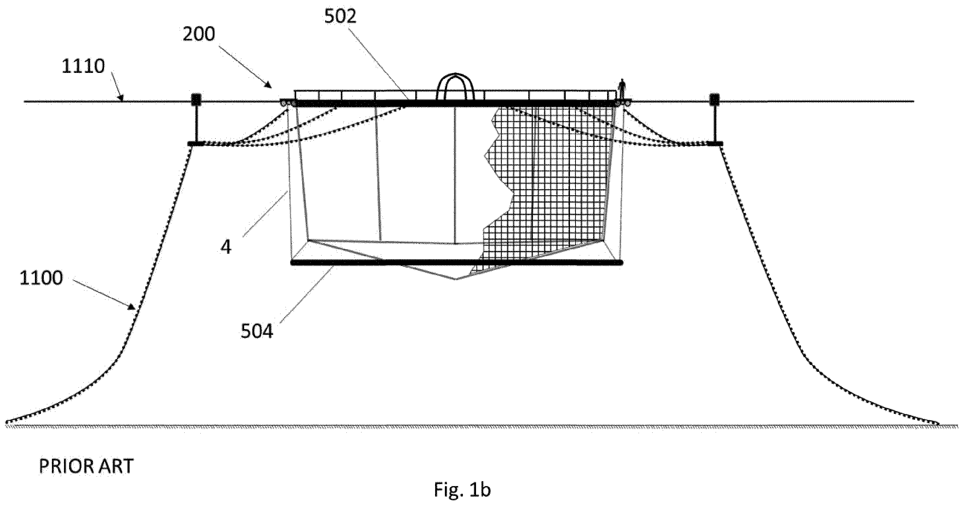

Figures 1a and 1b provide general layouts of aquaculture net pens (200) as are known in the prior art. As detailed in the background section, these aquaculture net pens (200) comprise a floating collar (502) and a sinker ring (504). The floating collar (502) and sinker ring (504) of the prior art are however not configured for variable and controllable buoyancy. In addition, the prior art examples of floating collars (502) and sinker rings (504) are not easily collapsible or inflatable.

Figure 2a illustrates a fish pen system (200) where a float ring (202), comprising one or more a variable buoyancy beams (100) in accordance with the present application is used to suspend a containment net (4) in the water column. A sinker ring (204) comprising one or more a variable buoyancy beams (100) as detailed further in Figure 2b is attached to the lower perimeter of the net to pre-tension the net (4) and to provide additional support to maintain the shape of the net (4).

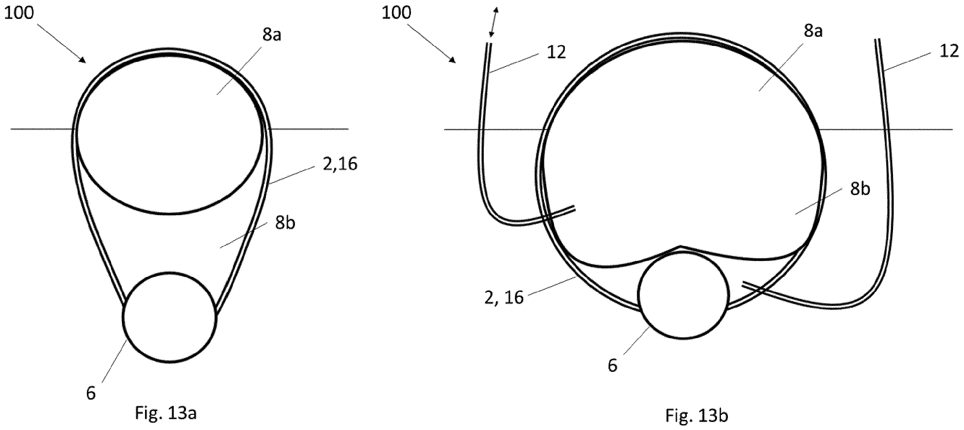

Figure 2b illustrates a perspective view of a section of tube (2) in accordance with an embodiment of the present application. A negative buoyancy constituent (6) is incorporated into the tube (2). This negative constituent (6) may be a metal, in this exemplary arrangement shown a steel wire, at least partially disposed within the interior of the tube (2). It will be seen from the examples of Figure 13, that the steel wire may extend across the boundary of the tube wall (16). The hollow interior of the tube (2) is filled with a first fluid (8a), for example air, and a second fluid (8b), for example seawater.

Figure 3 illustrates a fish pen system (200) where a vertical strut (206), comprising one or more a variable buoyancy beams (100) in accordance with the present invention, is used in conjunction with a sinker ring (204) in accordance with present invention to position and pre-tension a containment net (4) in the water column. The sinker ring (204) comprising one or more a variable buoyancy beams (100) is attached to the outer perimeter of the net in order to pre-tension the net (4) and to provide additional support to maintain the shape of the net (4).

Figure 4 provides a general layout of a mussel culture longline (300) as is known in the prior art. As detailed in the background section, these longlines (300) comprise a number of individual floats (304), suspending a head rope (306), from which a drop rope (308) is suspended at regular intervals through the water column to provide a substrate for the culture of shellfish, such as mussels. The longline (300) depends on external tension from the mooring (1100) and ground anchors (1105) to maintain its suspended form, with arrows shown to depict the resulting tension forces applied to the float (304) attachments by the head rope (306) and mooring (1100).

Figure 5 provides a general layout of a mussel culture system (300) known in prior art, where a rigid pipe flotation (310) is used to suspend a net (4) through the water column to provide a substrate for the culture of shellfish such as mussels. The pipe flotation (310) of the prior art is not configured to be easily collapsible or inflatable or to have selectable bend stiffening properties to mitigate the dynamic response of the flotation to waves. The pipe flotation (310) of the prior art is not configured to have a variable buoyancy such that the freeboard can be kept low to reduce the wave-induced response, while also being able to compensate for the growth in biomass on the suspended net to maintain general stability.

Figure 6a illustrates an elevation and cross-sectional views of an exemplary variable buoyancy beam (100) according to one aspect of this application. The variable buoyancy beam comprises a hollow tube (2) formed with an impermeable wall (16), optionally being a foldable and collapsible membrane wall. The variable buoyancy beam is configured to retain air as a first fluid (8a) in a single internal bladder (10) and seawater as a second fluid (8b) wherein the air is compressible and has a density less dense than the density of the seawater in which the beam (100) is to operate. The variable buoyancy beam in Figure 6a is suitably sealed with flanged end fittings (24).

Figure 6b illustrates a cross-sectional view of a variable buoyancy beam (100) similar to that shown in Figure 6a, further comprising a plurality of internal bladders (10) containing a first fluid (8a) and a first common inflation manifold (33) with check valves (31) for adding the first fluid (8a) to the internal bladders (10) and a second common deflation manifold (34) with check valves (31) for removing the first fluid (8a) from the internal bladders (10), so as to prevent the first fluid (8a) moving between the plurality of internal bladders (10), when installed. Each manifold (33,34) further comprises one external connection with a control valve (30). The beam (100) further comprises an external connection with a control valve for the second fluid (8b), to which an umbilical (12) is also connected to facilitate operational control from a remote location, such as from the surface, where the beam (100) is intended to operate in a submerged location.

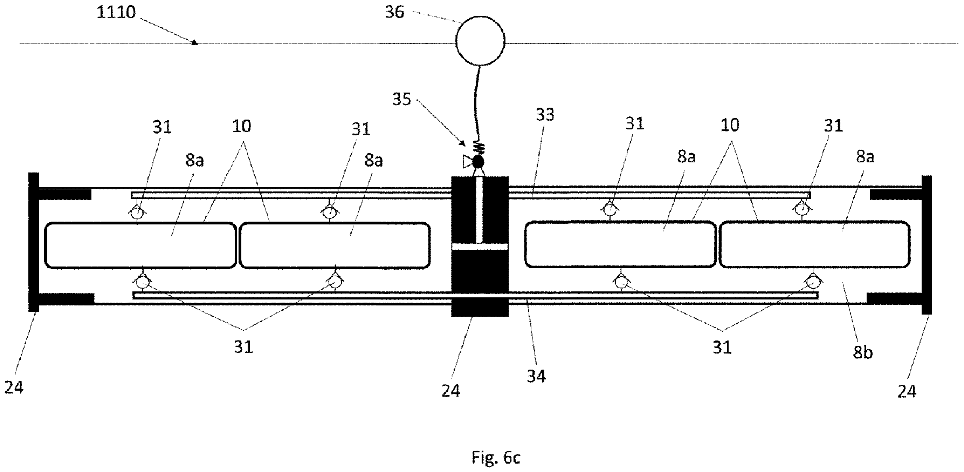

Figure 6c illustrates a cross-sectional view of two variable buoyancy beams (100) similar to that shown in Figure 6b, further comprising a common end fitting (24) with a float-activated valve (35) that opens in response to forces acted upon it by a float (36) as a result of submergence changes of the variable-buoyancy beam (100).

Figure 7 illustrates an elevation and cross-sectional views of another variable buoyancy beam (100). This variable buoyancy beam comprising a hollow tube (2) formed with a foldable, impermeable, and collapsible membrane wall (16), configured to retain air as first fluid (8a) in three separate internal bladders (10) and seawater as a second fluid (8b), wherein the air is compressible and has a density less dense than the density of the seawater in which the beam (100) is to operate. The variable buoyancy beam in Figure 7 is sealed with a continuous membrane with torispherical shells at the tube ends. The variable buoyancy beam in Figure 7 is encapsulated with a net structure (20) with a plurality of, in the example shown eight, longitudinal cable members (22) and a plurality of, in the example shown ten, circumferential cable members (22). The cable members may be manufactured from any suitable material including, for example, polyethylene. The polyethylene may be UHMwPE (Ultra High Molecular weight Polyethylene) or HMPE (High Modulus Polyethylene) as would be sold under the DYNEEMA trade mark.

Figure 8 illustrates an elevation and cross-sectional views of the same variable buoyancy beam (100) as illustrated in Figure 7, except that the air is contained in a single closed cell foam structure (26) instead of 3 air bladders.

Figure 9 illustrates how a plurality, in the example shown seven, of variable buoyancy beams (100) of the type illustrated in Figure 6a may be connected by end connectors (24) to form a variable buoyancy truss structure (404).

Figure 10a illustrates a perspective view of the variable buoyancy beam (100) where the beam is curved into a ring. The beam constitutes a negatively buoyant constituent (6) in the form of continuously distributed high-density ballasting materials (14), examples of this type of continuously distributed high-density ballasting materials include dense elongate members as per Figure 14a or steel ropes as per Figure 14b such that it forms a sinker ring (204);

Figure 10b illustrates a perspective view of a sinker ring (204) showing an alternative negatively buoyant constituent (6) in the form of intermittently spaced high-density ballasting materials (14) in a rigid tube of variable buoyancy;

Figure 11 illustrates a perspective view of a centrally-supported polygonal toroid (402) formed from a plurality, in the example shown six, variable buoyancy beams (100) of the type illustrated in Figure 7. Radial tendons connect the toroidal polygon to a central hub structure, the tendons comprising rope, chain, wire or elastomeric tendon materials.

Figure 12a and 12b illustrates cross sections of a variable buoyancy beam (100) similar to that illustrated in Figure 7, in partially collapsed (Figure 12a) and partially inflated (or rigid state Figure 12b) wherein the two fluids (8a, 8b) are present in relatively equal states in Figure 12a whereas the proportion of the first fluid (8a) to the second fluid (8b) is small in Figure 12b, thus the second fluid (8b) has been added to the tube (2), and the pressure within the tube (2) has increased partially compressing the first fluid (8a) and the tube (2) together with the encapsulating net (20) has become at least somewhat rigid.

Figure 13a and 13b illustrates cross sections of a variable buoyancy beam (100) similar to that illustrated in Figure 6a, but with a high density constituent (6), in partially collapsed (Figure 13a) and partially inflated (or rigid) state (Figure 13b) wherein the two fluids (8a, 8b) are present in relatively equal states in Figure 13a whereas the proportion of the first fluid (8a) to the second fluid (8b) is great in Figure 13b, thus fluid has been added to the tube (2), the pressure within the tube (2) has increased and the tube (2) has become at least somewhat rigid.

Figure 14a illustrates an alternative ballasting option for a variable buoyancy beam (100). In this option, the tube (2) itself is manufactured from high density ballast material (14) or wires or strands of high-density ballast material (14) could be embedded in the tube (2). The flexibility of wire strands and wire rope options for high density ballast material (14) ensures that the collapsibility of the variable buoyancy beam (100) is not hindered by the additional material.

Figure 14b illustrates an alternative ballasting option for a variable buoyancy beam (100) wherein the high-density ballast material (14) is attached to the outside of the tube (2). This configuration may be advantageous considering manufacturing techniques, as the extrusion of the tube (2) would not be hindered by the addition of extra material in the manufacturing stage. The high-density ballast material (14) can form an integral part of the encapsulating net (20).

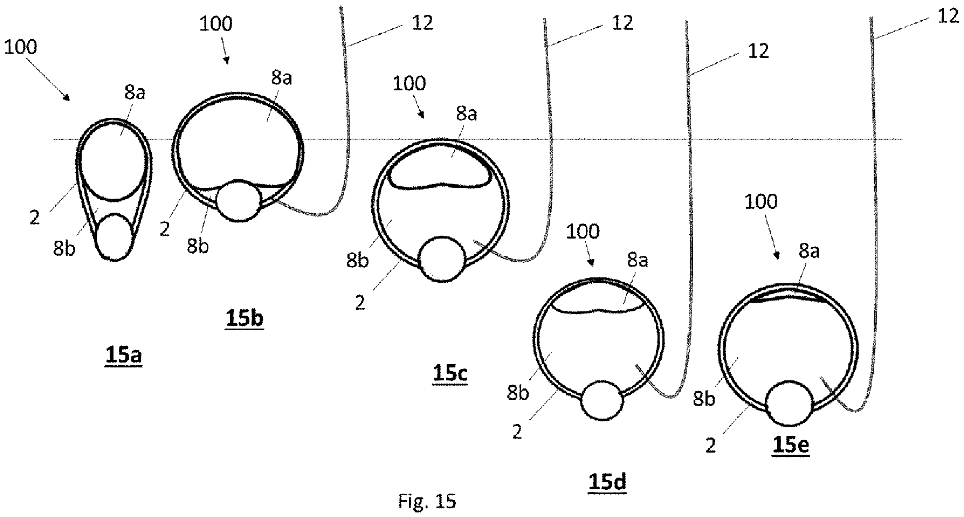

Figure 15a illustrates a cross section of the variable buoyancy beam (100) in a collapsed and buoyant configuration when the tube (2) is filled with a relatively equal volumes of a low-density fluid (8a) at low pressure and a high-density fluid (8b) at low pressure. Figure 15b illustrates a cross section of the variable buoyance beam (100) in a rigid and positively buoyant configuration when the tube (2) is filled with a majority of a low-density fluid (8a) at high pressure and a minority of a high-density fluid (8b) at high. Figure 15c illustrates a cross section of the variable buoyancy beam (100) in a rigid and neutrally buoyant configuration when the tube (2) is filled with a minority volume of a low-density fluid (8a) at high pressure and a majority volume of high-density fluid (8b) at high pressure. Figure 15d illustrates a cross section of the variable buoyance beam (100) in a rigid and negatively buoyant configuration when the tube (2) is filled with a further minority of low-density fluid (8a) at high pressure and a further majority of high-density fluid (8b) at high pressure. Figure 15e illustrates a cross section of the variable buoyance beam (100) in a rigid and negatively buoyant configuration when the tube (2) is filled with an almost full majority of high density fluid (8b) at high pressure and almost negligible minority of low density fluid at high pressure (8a).

Figure 16a illustrates a general layout of a shellfish, suitably mussel, culture system (300). The culture system (300) comprises a head beam (302) formed by one or more variable buoyancy beams (100), similar to that illustrated in Figure 7. The beam (100) has a variable buoyancy and, by changing the buoyancy of the beam (100), it is possible to control the freeboard or residual buoyancy of the head beam (302) as well as compensate for any changes in the gravity loads applied to the head beam (302) by the attached mussel culture drop ropes (308). In one arrangement the variable buoyancy beam (100) of the head beam (302) is encapsulated in a rope net (20), such that the net provides attachment points for connections to an under-slung head rope (306).

Figure 16b illustrates a submerged layout of a shellfish, suitably mussel, culture system (300) with a head beam (302) in a fully submerged position, formed by one or more variable buoyancy beams (100), similar to that illustrated in Figure 6c. The beam (100) has a variable buoyancy and, by changing the buoyancy of the beam (100), it is possible to control the buoyancy of the head beam (302) as well as compensate for any changes in the gravity loads applied to the beam (302) by the attached mussel culture drop ropes (308). The variable buoyancy may, as explained above, be controlled passively by float-actuated valves (35), which are configured to release the seawater (8b) from the connected beam (100), when the submergence exceeds a threshold set by the attached float (36). In one arrangement the variable buoyancy beam (100) of the head beam (302) is encapsulated in a rope net (20), such that the net provides attachment points for the dropper ropes (308).

Figure 17 illustrates a general layout of a shellfish, suitably mussels, and seaweed culture system (300) in a normal operating position. The mussel culture system (300) comprises a centrally-supported polygonal ring (402) similar to that illustrated in Figure 11, attached to a floating hub structure. The centrally-supported polygonal ring is formed by one or more variable buoyancy beams (100), onto which shellfish drop ropes (308) and seaweed biomass (312) are attached.

Figure 18a shows the mussel and seaweed culture system (300) illustrated in Figure 17, wherein the ring (402) is de-ballasted to the surface for operational purposes such as to facilitate inspection, harvest or maintenance.

Figure 18b shows the mussel and seaweed culture system (300) illustrated in Figure 17. wherein the ring (402) is in a collapsed, buoyant condition to facilitate installation and/or demobilisation operations.

Figures 19, 20, 21 and 22 illustrate a typical deployment sequence for a collapsible sinker ring (204) comprising one or more variable buoyancy beams (100) as will now be explained.

In Figure 19 the sinker ring (204) comprising one or more variable buoyancy beams (100) are provided in a collapsed buoyant state and the negative buoyancy constituent (6) is already incorporated into the collapsible tube (2).

In Figure 20, a fluid has been added to the interior of the collapsible tube (2) such that the tube (2) has become partially rigid. The fluid which has been added is of a density relative to seawater and of a quantity such that is does not blance the negative buoyancy of the negative buoyancy constituent (6), thus the sinker ring (204) has also become negatively buoyant.

In Figure 21, the one or more variable buoyancy tubes (100) comprising the sinker ring (204) have been filled with at least one fluid such that the sinker ring (204) is now in its fully inflated rigid condition. At this point the sinker ring (204) is negatively buoyant, however it has not yet reached its optimum level of negative buoyancy wherein the sinker ring (204) is tensioning the nets (4) which are attached to both the floating collar (502) and the sinker ring (204).

In Figure 22, the fluid ratio has been further adjusted such that the combination of fluid within the tube (2) and the negative buoyancy constituent (6) are providing a level of negative buoyancy to the one or more variable buoyancy beams (100) which is sufficient to sink the sinker ring (204) into the water wherein the sinker ring (204) is held in place at a depth from the surface of the water which is defined by the structure of the net (4) of the aquaculture pen (200), or more particularly the length of net (4) available (or other structural features which are attached to the floating collar (502)) to span between the floating collar (502) and the sinker ring (204).

Figure 23a illustrates an exemplary first step in another exemplary deployment sequence wherein a sinker ring (204) comprises a centrally-supported polygonal toroid (402), formed from one or more variable buoyancy beams (100) and a negative buoyancy constituent (6) and is attached to a floating hub structure to form a net pen system (200) for the culture of fish. Figure 23a shows an initially buoyant and collapsed configuration within the aquaculture net pen (200). Such a configuration can be usefully adopted during a transit of the net pen (200) to its installation location. On arrival at its installation location, the pen may then be deployed. Figure 23b illustrates an exemplary second step in the deployment sequence wherein the aquaculture pen structure (200) is first connected to an offshore mooring (1100). Figure 23c shows how, having been tethered to the offshore mooring, the pen may be coupled at multiple points to the seabed (1105).

Figure 23d illustrates an exemplary third step in a deployment sequence wherein, once the pen is secured, the one or more variable buoyancy beams (100) are partially pressurised and adopt a buoyant configuration on the surface (1110) of the water such that it forms a semi rigid ring. Having been so inflated, Figure 23e illustrates an exemplary fourth step wherein the rigid one or more variable buoyancy beams (100) are de-ballasted such that it is submerged below the surface (1110) of the water. The submerged sinker ring can be stabilised about the hub structure by the elastic properties of the centrally supported polygonal toroid (402), as described in WO2020212613-A1, such that its level of submergence can be configured or varied depending on the buoyancy of the one or more variable buoyancy beams (100), and Figure 23f illustrates a final point in the deployment sequence wherein the one or more variable buoyancy beams (100) are de-ballasted to a point wherein the sinker ring is located at a lower region of the aquaculture net pen (200) and thus applies negative buoyancy tensioning forces to the aquaculture net pen (200).

The above exemplary arrangements of a variable buoyancy beam (100) and a sinker ring (204) are provided to assist the person of skill in an understanding of the present teaching, and should not be construed as limiting the scope of the invention, which is defined by the appended claims, to that which has been explicitly described. Whilst the present application has been explained with reference to supporting aquaculture structures, it will be appreciated that the arrangements may be employed to support other marine structures.

## Claims

1. A variable buoyancy beam (100), suitable for use in aquaculture, the beam (100) comprising:
a hollow elongated tube (2) comprising an external wall (16), wherein the tube is configured to retain a first compressible fluid (8a) of a first density and a second incompressible fluid (8b) of a second density;
at least one internal bladder (10) formed by a flexible impermeable membrane, provided within the hollow elongated tube (2) for separating the first fluid (8a) from the second fluid (8b) wherein the buoyancy of the beam (100) may be operatively varied by selective variation of a ratio of the first fluid (8a) to the second fluid (8b) within the tube (2), **characterized in that** the external wall (16) of the hollow elongated tube (2) is impermeable.

2. A variable buoyancy beam (100) according to claim 1, further encapsulated by a re-enforcing net structure (20), comprising an array of one or more cable elements (22) and wherein the cable elements (22) are selected from one or more of rope, chain, wire, webbing strap, and open-meshed fabric, suitably wherein the re-enforcing net structure (20) provides attachment points to the beam for suspending aquaculture structures (4, 306, 308, 312) in an aquatic environment with the attachment point load distributed onto the tube (2) by the re-enforcing net structure (20).

3. A variable buoyancy beam (100) according to any preceding claim, where the at least one bladder comprises a plurality of internal bladders (10) distributed at locations along the tube (2), where the plurality of bladders is secured longitudinally within the tube (2) in order to maintain their general longitudinal position within the tube for overall ballast stability.

4. The variable buoyancy beam (100) according to any one of claims 1 to 3 where the first fluid (8a) is contained within a closed-cell foam structure (26) inside the tube (2), wherein the closed-cell foam structure is flexible.

5. A variable buoyancy beam (100) according to claim 2, wherein the tube wall (16) is formed from a flexible membrane, the tube (2) having a collapsed state and an expanded state, such that in use a strength of the beam (100) may be operatively varied by introduction of at least one of the first fluid (8a) or the second fluid (8b) in order to provide pre-stress in the membrane wall (16) by forcing the tube to the expanded state so that the tube (2) resists bending or buckling due to external loads applied to the variable buoyancy beam (100), suitably wherein the encapsulating net (20) and its cable elements (22) are pre-tensioned by contact forces applied by the membrane wall (16) of the tube (2) in its expanded state and wherein cable elements (22) with a longitudinal component along the axis of the beam (100) are pre-tensioned so that the variable buoyancy beam (100) acts to resist bending or buckling due to the application of external loads.

6. The variable buoyancy beam (100) according to any previous claim, with a negatively buoyant constituent (6) extending about or within the tube, the buoyancy of the variable buoyancy beam (100) being a combination of the buoyancy of the tube (2) and the negatively buoyant constituent (6).

7. The variable buoyancy beam (100) according to any preceding claim, the variable buoyancy beam (100) comprising a valve (30,31,35), wherein the valve is configured to control the access and egress of at least one of a first fluid (8a) or a second fluid (8b) between the interior of the tube (2) and the exterior of the tube (2), suitably wherein the valve (35) is configured to open at a threshold submergence depth and allow any one of the first fluid (8a) or the second fluid (8b) to flow between the interior of the tube (2) and the exterior of the tube (2) to affect a desirable compensating buoyancy change, optionally wherein the valve is passively actuated by ambient pressure-changes or by loads applied from an attached float (36).

8. The variably buoyancy beam (100) of claim 3, where each of the plurality of internal bladders (10) are connected via valves (30) to at least one common manifold (33, 34).

9. The variable buoyancy beam (100) according to claim 7, further comprising a pump wherein the pump is configured to move at least one of a first fluid (8a) or a second fluid (8b) between the interior of the tube (2) and the exterior of the tube (2) via the valves (30,31,35).

10. The variable buoyancy beam (100) of any of claims 8 to 9, further comprising at least one umbilical (12) which is configured to connect the valve (30,31,35) to a source of the first fluid (8a) or the second fluid (8b).

11. The variable buoyancy beam (100) according to any previous claim, wherein the variable buoyancy beam (100) consists in one or more beams (100), where the one or more beams (100) are:
a) configured to form a toroidal structure, such as a curved ring (202, 204) or polygonal toroid (402),
b) configured to form a centrally-supported polygonal toroid (402), wherein the one or more beams (100) are connected to a hub structure with spoked beams, struts or cables, optionally being stabilising elastic tendons, or
c) are connected at their ends to form a truss structure (404).

12. The variable buoyancy beam (100) according to claim 6, wherein the negatively buoyant constituent (6) is in intimate contact with a wall (16) of the tube (2), the negatively buoyant constituent comprising a high-density ballasting material (14), suitably the high-density ballasting material (14) comprises a metal.

13. The variable buoyancy beam (100) of claim 1 or 2, wherein the internal bladder is defined by a membrane extending in a plane extending longitudinally along the tube, with the sides of the membrane defined by the start and end points of an arc of an internal wall of the tube such that the membrane effectively dividing the tube into a first region for the first fluid (8a) and a second region for the second fluid (8b).

14. An aquaculture system (200) comprising a variable buoyancy beam according to any preceding claim, wherein:
a) the aquaculture system is an aquaculture net system comprising at least one net coupled to the variable buoyancy beam (100),
b) the aquaculture system is a a shellfish culture system (300) comprising at least one shellfish culture substrate coupled to the variable buoyancy beam, or.
c) the aquaculture system is a seaweed or algae culture system (300) comprising at least one seaweed or algae culture substrate coupled to the variable buoyancy beam (100).

## Patentansprüche

1. Ein Träger (100) mit variablem Auftrieb, der für die Verwendung in der Aquakultur geeignet ist, wobei der Träger (100) Folgendes beinhaltet:
einen hohlen länglichen Schlauch (2), der eine Außenwand (16) beinhaltet, wobei der Schlauch konfiguriert ist, um ein erstes, komprimierbares Fluid (8a) mit einer ersten Dichte und ein zweites, nicht komprimierbares Fluid (8b) mit einer zweiten Dichte zu halten;
mindestens eine Innenblase (10), die durch eine flexible undurchlässige Membran gebildet ist, die innerhalb des hohlen länglichen Schlauchs (2) bereitgestellt ist, um das erste Fluid (8a) von dem zweiten Fluid (8b) zu trennen, wobei der Auftrieb des Trägers (100) durch eine selektive Variation eines Verhältnisses des ersten Fluids (8a) zu dem zweiten Fluid (8b) innerhalb des Schlauchs (2) betrieblich variiert werden kann, **dadurch gekennzeichnet, dass** die Außenwand (16) des hohlen länglichen Schlauchs (2) undurchlässig ist.

2. Träger (100) mit variablem Auftrieb gemäß Anspruch 1, der ferner durch eine verstärkende Netzstruktur (20) eingekapselt ist, die eine Anordnung von einem oder mehreren Kabelelementen (22) beinhaltet, und wobei die Kabelelemente (22) aus einem oder mehreren von Seil, Kette, Draht, Gurtband und grobmaschigem Gewebe ausgewählt sind, wobei die verstärkende Netzstruktur (20) geeigneterweise Befestigungspunkte an dem Träger bereitstellt, um Aquakulturstrukturen (4, 306, 308, 312) in einer aquatischen Umgebung aufzuhängen, wobei die Befestigungspunktlast durch die verstärkende Netzstruktur (20) auf den Schlauch (2) verteilt wird.

3. Träger (100) mit variablem Auftrieb gemäß einem der vorhergehenden Ansprüche, wobei die mindestens eine Blase eine Vielzahl von Innenblasen (10) beinhaltet, die an Stellen entlang des Schlauchs (2) verteilt sind, wobei die Vielzahl von Blasen längs innerhalb des Schlauchs (2) gesichert sind, um ihre generelle Längsposition innerhalb des Schlauchs zwecks Gesamtballaststabilität aufrechtzuerhalten.

4. Träger (100) mit variablem Auftrieb gemäß einem der Ansprüche 1 bis 3, wobei das erste Fluid (8a) innerhalb einer geschlossenporigen Schaumstoffstruktur (26) im Inneren des Schlauchs (2) enthalten ist, wobei die geschlossenporige Schaumstoffstruktur flexibel ist.

5. Träger (100) mit variablem Auftrieb gemäß Anspruch 2, wobei die Schlauchwand (16) aus einer flexiblen Membran gebildet ist, wobei der Schlauch (2) einen kollabierten Zustand und einen expandierten Zustand aufweist, sodass eine Stärke des Trägers (100) im Gebrauch durch die Einführung von mindestens einem von dem ersten Fluid (8a) oder dem zweiten Fluid (8b) betrieblich variiert werden kann, um eine Vorbelastung in der Membranwand (16) bereitzustellen, indem der Schlauch in den expandierten Zustand gezwungen wird, sodass der Schlauch (2) Biegen oder Knicken aufgrund äußerer Lasten, die auf den Träger (100) mit variablem Auftrieb aufgebracht werden, widersteht, wobei das einkapselnde Netz (20) und seine Kabelelemente (22) geeigneterweise durch Kontaktkräfte vorgespannt werden, die durch die Membranwand (16) des Schlauchs (2) in ihrem expandierten Zustand aufgebracht werden, und wobei Kabelelemente (22) mit einer Längskomponente entlang der Achse des Trägers (100) vorgespannt werden, sodass der Träger (100) mit variablem Auftrieb dahingehend wirkt, Biegen oder Knicken aufgrund der Aufbringung äußerer Lasten zu widerstehen.

6. Träger (100) mit variablem Auftrieb gemäß einem der vorherigen Ansprüche, wobei sich ein Bestandteil (6) mit negativem Auftrieb um den oder innerhalb des Schlauchs erstreckt, wobei der Auftrieb des Trägers (100) mit variablem Auftrieb eine Kombination des Auftriebs des Schlauchs (2) und des Bestandteils (6) mit negativem Auftrieb ist.

7. Träger (100) mit variablem Auftrieb gemäß einem der vorhergehenden Ansprüche, wobei der Träger (100) mit variablem Auftrieb ein Ventil (30, 31, 35) beinhaltet, wobei das Ventil konfiguriert ist, um den Zutritt und Austritt von mindestens einem von einem ersten Fluid (8a) oder einem zweiten Fluid (8b) zwischen dem Inneren des Schlauchs (2) und dem Äußeren des Schlauchs (2) zu steuern, wobei das Ventil (35) geeigneterweise konfiguriert ist, um sich bei einer Schwellwert-Tauchtiefe zu öffnen und es einem beliebigen von dem ersten Fluid (8a) oder dem zweiten Fluid (8b) zu ermöglichen, zwischen dem Inneren des Schlauchs (2) und dem Äußeren des Schlauchs (2) zu fließen, um eine wünschenswerte ausgleichende Auftriebsänderung herbeizuführen, wobei das Ventil optional durch Umgebungsdruckänderungen oder durch von einem befestigten Schwimmer (36) aufgebrachte Lasten passiv betätigt wird.

8. Träger (100) mit variablem Auftrieb gemäß Anspruch 3, wobei jede der Vielzahl von Innenblasen (10) über Ventile (30) mit mindestens einem gemeinsamen Verteiler (33, 34) verbunden ist.

9. Träger (100) mit variablem Auftrieb gemäß Anspruch 7, der ferner eine Pumpe beinhaltet, wobei die Pumpe konfiguriert ist, um mindestens eines von einem ersten Fluid (8a) oder einem zweiten Fluid (8b) über die Ventile (30, 31, 35) zwischen dem Inneren des Schlauchs (2) und dem Äußeren des Schlauchs (2) zu bewegen.

10. Träger (100) mit variablem Auftrieb gemäß einem der Ansprüche 8 bis 9, der ferner mindestens eine Zufuhrleitung (12) beinhaltet, die konfiguriert ist, um das Ventil (30, 31, 35) mit einer Quelle des ersten Fluids (8a) oder des zweiten Fluids (8b) zu verbinden.

11. Träger (100) mit variablem Auftrieb gemäß einem der vorherigen Ansprüche, wobei der Träger (100) mit variablem Auftrieb aus einem oder mehreren Trägern (100) besteht, wobei der eine oder die mehreren Träger (100):
a) konfiguriert sind, um eine torusförmige Struktur zu bilden, wie etwa einen gekrümmten Ring (202, 204) oder einen polygonalen Torus (402),
b) konfiguriert sind, um einen mittig gestützten Torus (402) zu bilden, wobei der eine oder die mehreren Träger (100) mit einer Nabenstruktur mit Speichenbalken, -streben oder -kabeln, bei denen es sich optional um stabilisierende elastische Spannglieder handelt, verbunden sind, oder
c) an ihren Enden verbunden sind, um eine Fachwerkstruktur (404) zu bilden.

12. Träger (100) mit variablem Auftrieb gemäß Anspruch 6, wobei der Bestandteil (6) mit negativem Auftrieb in engem Kontakt mit einer Wand (16) des Schlauchs (2) steht, wobei der Bestandteil mit negativem Auftrieb ein Ballastmaterial (14) hoher Dichte beinhaltet, wobei das Ballastmaterial (14) hoher Dichte geeigneterweise ein Metall beinhaltet.

13. Träger (100) mit variablem Auftrieb gemäß Anspruch 1 oder 2, wobei die Innenblase durch eine Membran definiert ist, die sich in einer Ebene erstreckt, welche sich entlang des Schlauchs längs erstreckt, wobei die Seiten der Membran durch die Start- und Endpunkte eines Bogens einer Innenwand des Schlauchs definiert sind, sodass die Membran den Schlauch effektiv in einen ersten Bereich für das erste Fluid (8a) und einen zweiten Bereich für das zweite Fluid (8b) teilt.

14. Ein Aquakultursystem (200), das einen Träger mit variablem Auftrieb gemäß einem der vorhergehenden Ansprüche beinhaltet, wobei:
a) das Aquakultursystem ein Aquakulturnetzsystem ist, das mindestens ein Netz beinhaltet, das mit dem Träger (100) mit variablem Auftrieb gekoppelt ist,
b) das Aquakultursystem ein Muschelkultursystem (300) ist, das mindestens ein Muschelkultursubstrat beinhaltet, das mit dem Träger mit variablem Auftrieb gekoppelt ist, oder
c) das Aquakultursystem ein Seetang- oder Algenkultursystem (300) ist, das mindestens ein Seetang- oder Algenkultursubstrat beinhaltet, das mit dem Träger (100) mit variablem Auftrieb gekoppelt ist.

## Revendications

1. Une poutre à flottabilité variable (100), convenant pour être utilisée en aquaculture, la poutre (100) comprenant :
un tube (2) allongé creux comprenant une paroi externe (16), le tube étant configuré pour retenir un premier fluide compressible (8a) d'une première densité et un deuxième fluide incompressible (8b) d'une deuxième densité ;
au moins une poche interne (10) formée d'une membrane imperméable souple, fournie au sein du tube (2) allongé creux pour séparer le premier fluide (8a) du deuxième fluide (8b) où il est possible de faire varier de façon opérationnelle la flottabilité de la poutre (100) par variation sélective d'un rapport du premier fluide (8a) au deuxième fluide (8b) au sein du tube (2), **caractérisée en ce que** la paroi externe (16) du tube (2) allongé creux est imperméable.

2. Une poutre à flottabilité variable (100) selon la revendication 1, encapsulée en outre dans une structure formant filet de renforcement (20), comprenant un réseau d'un ou de plusieurs éléments formant câbles (22) et les éléments formant câbles (22) étant sélectionnés parmi un ou plusieurs éléments parmi de la corde, des chaînes, du fil, des courroies de maillage, et du tissu maillé, où de façon appropriée la structure formant filet de renforcement (20) fournit des points d'attache à la poutre pour suspendre des structures d'aquaculture (4, 306, 308, 312) dans un environnement aquatique, la charge de points d'attache étant répartie sur le tube (2) par la structure formant filet de renforcement (20).

3. Une poutre à flottabilité variable (100) selon n'importe quelle revendication précédente, dans laquelle l'au moins une poche comprend une pluralité de poches internes (10) réparties au niveau d'emplacements le long du tube (2), dans laquelle les poches de la pluralité de poches sont assujetties longitudinalement au sein du tube (2) afin de maintenir leur position longitudinale générale au sein du tube pour une stabilité globale de ballast.

4. La poutre à flottabilité variable (100) selon n'importe laquelle des revendications 1 à 3 dans laquelle le premier fluide (8a) est contenu au sein d'une structure en mousse à alvéoles fermées (26) dans le tube (2), la structure en mousse à alvéoles fermées étant souple.

5. Une poutre à flottabilité variable (100) selon la revendication 2, où la paroi de tube (16) est formée à partir d'une membrane souple, le tube (2) ayant un état plié et un état déployé, de telle sorte que lors de l'utilisation il est possible de faire varier de façon opérationnelle une résistance de la poutre (100) par l'introduction d'au moins un fluide parmi le premier fluide (8a) ou le deuxième fluide (8b) afin de fournir une pré-contrainte dans la paroi en membrane (16) en forçant le tube vers l'état déployé de sorte que le tube (2) résiste à un gauchissement ou un flambage dus à des charges externes appliquées sur la poutre à flottabilité variable (100), où de façon appropriée le filet d'encapsulation (20) et ses éléments formant câbles (22) sont pré-tendus par des forces de contact appliquées par la paroi en membrane (16) du tube (2) dans son état déployé et où des éléments formant câbles (22) avec une composante longitudinale le long de l'axe de la poutre (100) sont pré-tendus de sorte que la poutre à flottabilité variable (100) agit pour résister à un gauchissement ou un flambage dus à l'application de charges externes.

6. La poutre à flottabilité variable (100) selon n'importe quelle revendication précédente, un composant de flottaison négative (6) s'étendant autour ou au sein du tube, la flottabilité de la poutre à flottabilité variable (100) étant une combinaison de la flottabilité du tube (2) et du composant de flottaison négative (6).

7. La poutre à flottabilité variable (100) selon n'importe quelle revendication précédente, la poutre à flottabilité variable (100) comprenant une vanne (30, 31, 35), la vanne étant configurée pour commander l'accès et la sortie d'au moins un fluide parmi un premier fluide (8a) ou un deuxième fluide (8b) entre l'intérieur du tube (2) et l'extérieur du tube (2), la vanne (35) étant de façon appropriée configurée pour s'ouvrir à une profondeur de submersion seuil et permettre à n'importe quel fluide parmi le premier fluide (8a) ou le deuxième fluide (8b) de s'écouler entre l'intérieur du tube (2) et l'extérieur du tube (2) afin d'influer sur un changement de flottabilité de compensation souhaité, la vanne étant facultativement actionnée de façon passive par des changements de pression ambiante ou par des charges appliquées à partir d'un flotteur attaché (36).

8. La poutre à flottabilité variable (100) de la revendication 3, dans laquelle les poches de la pluralité de poches internes (10) sont raccordées chacune par l'intermédiaire de vannes (30) à au moins un collecteur commun (33, 34).

9. La poutre à flottabilité variable (100) selon la revendication 7, comprenant en outre une pompe, la pompe étant configurée pour déplacer au moins un fluide parmi un premier fluide (8a) ou un deuxième fluide (8b) entre l'intérieur du tube (2) et l'extérieur du tube (2) par l'intermédiaire des vannes (30, 31, 35).

10. La poutre à flottabilité variable (100) de n'importe lesquelles des revendications 8 à 9, comprenant en outre au moins un ombilical (12) qui est configuré pour raccorder la vanne (30, 31, 35) à une source du premier fluide (8a) ou du deuxième fluide (8b).

11. La poutre à flottabilité variable (100) selon n'importe quelle revendication précédente, la poutre à flottabilité variable (100) consistant en une ou plusieurs poutres (100), les une ou plusieurs poutres (100) étant :
a) configurées pour former une structure toroïdale, telle qu'un anneau incurvé (202, 204) ou un tore polygonal (402),
b) configurées pour former un tore polygonal à support central (402), où les une ou plusieurs poutres (100) sont raccordées à une structure à moyeu avec des poutres en rayons, des entretoises ou des câbles, qui sont facultativement des tendons élastiques de stabilisation, ou
c) étant raccordées au niveau de leurs extrémités afin de former une structure en treillis (404).

12. La poutre à flottabilité variable (100) selon la revendication 6, où le composant de flottaison négative (6) est en contact étroit avec une paroi (16) du tube (2), le composant de flottaison négative comprenant un matériau de ballast à densité élevée (14), le matériau de ballast à densité élevée (14) comprenant de façon appropriée un métal.

13. La poutre à flottabilité variable (100) de la revendication 1 ou de la revendication 2, où la poche interne est définie par une membrane s'étendant dans un plan s'étendant longitudinalement le long du tube, les côtés de la membrane étant définis par les points d'origine et de terminaison d'un arc d'une paroi interne du tube de telle sorte que la membrane divise effectivement le tube en une première région pour le premier fluide (8a) et une deuxième région pour le deuxième fluide (8b).

14. Un système d'aquaculture (200) comprenant une poutre à flottabilité variable selon n'importe quelle revendication précédente, où :
a) le système d'aquaculture est un système de filet d'aquaculture comprenant au moins un filet couplé à la poutre à flottabilité variable (100),
b) le système d'aquaculture est un système de culture de mollusques et crustacés (300) comprenant au moins un substrat pour la culture de mollusques et crustacés couplé à la poutre à flottabilité variable, ou
c) le système d'aquaculture est un système de culture d'algues marines ou d'algues (300) comprenant au moins un substrat pour la culture d'algues marines ou d'algues couplé à la poutre à flottabilité variable (100).
